# EUROPÄISCHE PATENTSCHRIFT

(11) **EP 3 380 798 B1**
(45) Veröffentlichungstag und Bekanntmachung des Hinweises auf die Patenterteilung: **24.08.2022**
(21) Anmeldenummer: 16788144.0
(22) Anmeldetag: 31.10.2016
(51) Int. Cl.: F25D 23/06

(54) **VERFAHREN ZUM HERSTELLEN EINES HAUSHALTSGERÄTEBAUTEILS IN EINEM KOMBINIERTEN SPRITZGUSSPROZESS MIT EINEM DÜNNWANDSPRITZGIESSEN UND EINEM KASKADEN-SPRITZGIESSEN SOWIE HAUSHALTSGERÄTEBAUTEIL**
A METHOD FOR PRODUCING A COMPONENT OF A HOUSEHOLD APPLIANCE BY A COMBINED MOLDING PROCESS OF THE THIN WALL INJECTION MOLDING AND THE CASCADED INJECTION MOLDING AS WELL AS A COMPONENT OF A HOUSEHOLD APPLIANCE
PROCÉDÉ POUR PRODUIRE UNE COMPOSANTE POUR UN APPAREIL MÉNAGER EN UTILISANT UN PROCÉDÉ DE MOULAGE PAR INJECTION COMBINÉ DU MOULAGE PAR INJECTION D'UNE PAROI MINCE ET DU MOULAGE PAR INJECTION EN CASCADES ET AINSI QU'UNE COMPOSANTE POUR UN APPAREIL MÉNAGER

(30) Priorität: 27.11.2015 DE 102015223585
(43) Veröffentlichungstag der Anmeldung: 03.10.2018
(73) Patentinhaber: BSH Hausgeräte GmbH, 81739 München (DE)
(72) Erfinder: FURTH, Brigitte, DE 97318 Kitzingen (DE); HOLT, Sven, 89075 Ulm (DE); RAAB, Alfred, 73460 Hüttlingen (DE); HEISSWOLF, Tobias, 89428 Syrgenstein (DE)
(86) Internationale Anmeldenummer: PCT/EP2016/076219
(87) Internationale Veröffentlichungsnummer: WO 2017/089072

(56) Entgegenhaltungen:
- EP-A1- 0 491 682
- WO-A1-98/22275
- DE-A1-102005 009 007
- DE-T2- 69 513 121
- DE-T2- 69 524 488
- JP-A- 2005 007 860
- US-A1- 2006 170 125
- GAULER K: "BINDENAEHTE VON SPRITZGIESSTEILEN BESEITIGEN", PLASTVERARBEITER, HUETHIG GMBH, HEIDELBERG, DE, Bd. 37, Nr. 10, 1. Oktober 1986 (1986-10-01), Seiten 226-228, XP002069379, ISSN: 0032-1338
- SPINA R ED - BRUSCHI STEFANIA MERKLEIN MARION: "Injection moulding of automotive components: comparison between hot runner systems for a case study", JOURNAL OF MATERIALS PROCESSING TECHNOLOGY, ELSEVIER, NL, Bd. 155-156, 30. November 2004 (2004-11-30), Seiten 1497-1504, XP004661050, ISSN: 0924-0136, DOI: 10.1016/J.JMATPROTEC.2004.04.359
- FENG RUAN ET AL: "Exploiting Sequential-Valve-Gate Molding To Control Weld Lines", INTELLIGENT COMPUTATION TECHNOLOGY AND AUTOMATION (ICICTA), 2008 INTERNATIONAL CONFERENCE ON, IEEE, PISCATAWAY, NJ, USA, 20. Oktober 2008 (2008-10-20), Seiten 345-348, XP031354272, ISBN: 978-0-7695-3357-5

## Beschreibung

Die Erfindung betrifft ein Verfahren zum Herstellen eines Haushaltsgerätebauteils für ein Haushaltsgerät, bei welchem das Haushaltsgerätebauteil aus Kunststoff hergestellt wird. Des Weiteren betrifft die Erfindung auch ein Haushaltsgerätebauteil.

Aus der DE 10 2005 009 007 A1 ist ein Verfahren für die Herstellung von Platten, hergestellt aus transparentem Kunststoffmaterial, mit nicht-transparenten überspritzten Teilen bekannt. Darüber hinaus ist aus der DE 0 491 682 A1 das Herstellen von Spritzgussbauteilen bekannt.

Kunststoffbauteile als Haushaltsgerätebauteile für ein Haushaltsgerät sind umfänglich bekannt. Gerade für Haushaltskältegeräte in Form eines Kühlschranks oder eines Gefriergeräts oder eines Kühl-Gefrier-Kombigeräts sind derartige Haushaltsgerätebauteile beispielsweise als Türabsteller an einer Innenseite einer Tür bekannt. Darüber hinaus sind auch große Bauteile, wie eine Innenverkleidung beziehungsweise eine Innentür der Gesamttür, die zum Verschließen eines Aufnahmeraums für Lebensmittel an einem Gehäuse schwenkbar angeordnet ist, bekannt. Gerade diese Haushaltsgeräte sind relativ groß und werden bei gegenwärtiger Ausgestaltung des Umformens, insbesondere durch ein Thermoformen, hergestellt. Dazu werden zuvor extrudierte Halbzeuge in Form von Platten oder Coils verwendet.

Flächige Haushaltsgerätebauteile können auch mittels eines konventionellen Spritzgießens hergestellt werden. Die Wanddicke dieser Bauteile ist aber nach unten hin begrenzt, da für eine vollständige Füllung des Spritzgusswerkzeugs eine Mindestwanddicke erforderlich ist. Insbesondere bei größeren Bauteilen liegen die Wanddicken wesentlich oberhalb von 1,5 mm. Es wird bei diesen Vorgehensweisen die Schmelze über einen einzigen Anspritzpunkt in das Spritzgusswerkzeug eingebracht. Insbesondere bei derartig großen herzustellenden Haushaltsgerätebauteilen, die auch über große Bereiche flächig bzw. eben ausgebildet sind, ist bei herkömmlichen Herstellungsprozessen die Wanddicke nach unten hin begrenzt. Dies auch dahingehend, dass die Schließkräfte für das Spritzgusswerkzeug sehr groß sind. Auch dauert durch diese relativ große Wanddicke das Abkühlen der Schmelze sehr lang.

Daher wird bei der gegenwärtigen Fertigungstechnik besonders bei großen Bauteilen auch aus wirtschaftlichen Gründen das Thermoformen dem Spritzgießen vorgezogen.

Es ist Aufgabe der vorliegenden Erfindung, ein Verfahren zu schaffen, mittels welchem Haushaltsgerätebauteile durch ein Spritzgießen verbessert hergestellt werden können. Insbesondere ist es auch Aufgabe, ein entsprechendes Haushaltsgerätebauteil zu schaffen.

Diese Aufgabe wird durch ein Verfahren und ein Haushaltsgerätebauteil gemäß den unabhängigen Ansprüchen gelöst.

Bei einem erfindungsgemäßen Verfahren zum Herstellen eines Haushaltsgerätebauteils für ein Haushaltsgerät wird dieses Haushaltsgerätebauteil vollständig aus Kunststoff hergestellt. Ein wesentlicher Gedanke der Erfindung ist darin zu sehen, dass das Haushaltsgerätebauteil durch ein Spritzgießen hergestellt wird, wobei bei diesem Spritzgießen zumindest phasenweise und somit zumindest zeitweise während des Herstellungsprozesses eine Kombination spezifischer Einzelspritzgusstechniken durchgeführt und somit auch zusammengeführt werden. Gemäß der Erfindung ist somit bei dem Spritzgießen zumindest phasenweise eine Kombination eines Dünnwandspritzgießens und eines Kaskaden-Spritzgießens durchgeführt. Durch ein derartiges Verfahren wird somit das Haushaltsgerätebauteil dünnwandig ausgebildet und durch die bei dem Kaskaden-Spritzgießen erforderlichen mehreren Anspritzpunkte das Einbringen der Schmelze ermöglicht. Durch diese spezifische Kombination wird in besonders neuartiger und vorteilhafter Weise auch erreicht, dass Zuhaltekräfte des Spritzgusswerkzeugs bei der Herstellung des Haushaltsgerätebauteils relativ niedrig gehalten werden können. Insbesondere, da an manchen Stellen die eingespritzte Schmelze schon erstarrt ist und an anderen Stellen die Schmelze noch nicht oder gerade erst eingespritzt wird. Dies bedeutet auch, dass Spritzgusswerkzeuge verwendet werden können, die auch bei bisheriger üblicher Technik, die limitiert war, verwendet werden können. Durch die Reduzierung der Wanddicke des Haushaltsgerätebauteils ergibt sich einerseits eine Reduktion der erforderlichen Zuhaltekräfte. Da bei der Verwendung nur eines Anspritzpunktes bei einer derartigen dünnwandigen Ausgestaltung jedoch dann wiederum Nachteile beim Einspritzen der Schmelze und da bei relativ großen Bauteilen im Hinblick auf das unerwünschte frühzeitige Aushärten an der einen Stelle und das nicht ausreichende Verbringen der Schmelze an alle Stellen auftritt, wäre hier wiederum ein relativ großer Einspritzdruck erforderlich, was wiederum zu erhöhten Zuhaltekräften für das Spritzgusswerkzeug führen würde. Des Weiteren wäre bei einer derartigen Ausgestaltung dann der Nachteil dahingehend zu sehen, dass beim Abkühlen und somit einem gewissen Schrumpfen des Kunststoffes ein Nachspritzen zum Auffüllen nur bedingt und/oder wiederum mit hohem Druck erforderlich wäre, was wiederum zu hohen Zuhaltekräften führt.

Durch die Erfindung wird mit dem Kaskaden-Spritzgießen und somit mehreren Anspritzpunkten unter der Bedingung des Dünnwandspritzgießens auch dieses Problem gelöst. Durch die mehreren Anspritzpunkte kann ein zu frühzeitiges dennoch sehr schnelles Aushärten an spezifischen Stellen der Schmelze verhindert werden und es kann somit auch ein relativ gleichmäßiges Einbringen der Schmelze erfolgen, so dass das Aushärten auf der einen Seite und das Verbringen der Schmelze an alle Stellen im Spritzgusswerkzeug zur vollständigen finalen Formgebung des zu erzeugenden Haushaltsgerätebauteils erreicht wird. Durch die mehreren Anspritzpunkte wird dann auch die durch die dünnwandige Herstellung bereits einhergehende Reduzierung der erforderlichen Zuhaltekräfte des Spritzgusswerkzeugs noch begünstigt. Dieses neuartige Vorgehen in Form der Kombination von zwei ganz spezifischen Spritzgussvorgehensweisen lassen sich dann auch Spritzgusswerkzeuge und Maschinen verwenden, die bezüglich der wirtschaftlichen Herstellung des Haushaltsgerätebauteils vorteilhaft sind und in dem Zusammenhang niedrigere Zuhaltekräfte ausreichen. Da gerade diese Maschinen und Spritzgusswerkzeuge im Hinblick auf ihre dann jeweilige maximale Zuhaltekraft ein erheblicher Kostenfaktor in den Fertigungsanlagen sind, kann in dem Zusammenhang ein besonderer Vorteil durch die Erfindung erreicht werden. Es müssen somit insbesondere gegenüber der bereits oben erwähnten Spritzgussfertigung von derartig größeren Haushaltsgerätebauteilen, die dann jedoch nur dickwandig hergestellt werden können, keine anderweitigen, mit höheren Zuhaltekräften beaufschlagbaren Spritzgusswerkzeuge verwendet werden, im Gegenteil es können auch diese herkömmlichen Geräte und Maschinen eingesetzt werden. Durch die Erfindung kann dann auch das primäre Einspritzen von Schmelze in Anspritzpunkten erfolgen und gleichzeitig ein nachfüllendes Einspritzen von Schmelze in Anspritzpunkten erfolgen, über welche die vorher dort primär eingespritzte Schmelze im Spritzgusswerkzeug schon abgekühlt ist.

Die Erfindung ist in dem Zusammenhang besonders vorteilhaft für relativ große Haushaltsgerätebauteile, die große Anteile an ebenen oder im Wesentlichen ebenen Flächenbereichen aufweisen. Da gerade bei derartig geometrisch spezifischen Haushaltsgerätebauteilen, wie dies beispielsweise bei Innenverkleidungen beziehungsweise Innentüren einer Tür eines Haushaltskältegeräts der Fall ist, das herkömmliche Spritzgießen, wie es eingangs erläutert wurde, nicht wirtschaftlich ist, wird dem mit der Erfindung entgegengetreten.

Es wird das Dünnwandspritzgießen während des Spritzgießvorgangs mit einem charakteristischen Parameter betreffend das Wanddicken-Fließweg-Verhältnis von größer 1:200 durchgeführt. Erfindungsgemäß wird dieses Dünnwandspritzgießen besonders vorteilhaft mit einem Wanddicken-Fließweg-Verhältnis zwischen größer 1:200 und 1:300 durchgeführt Durch einen derartigen Wert beziehungsweise ein Werteintervall des charakterisierenden Parameters lassen sich die oben genannten Vorteile im besonderen Maße erreichen. Gerade bei den dann größeren herzustellenden Bauteilen mit großen flächigen Bereichen kann dann auch ein bevorzugtes Maß der Dünnwandigkeit mit gleichzeitiger ausreichender Aushärtung der Schmelze und dennoch ausreichender Geschwindigkeit der Fließfronten erzielt werden. Dadurch wird das Haushaltsgerätebauteil formgenau und dünnwandig erzeugt, wobei die Zuhaltekräfte insbesondere auch in der Abkühlphase, die dann auch aufgrund der Dünnwandigkeit wiederum kürzer ist, relativ gering gehalten werden können.

Vorzugsweise wird vorgesehen, dass für das Kaskaden-Spritzgießen in Richtung der Längsachse des Haushaltsgerätebauteils betrachtet von der Mehrzahl von Anspritzpunkten zumindest ein Anspritzpunkt mittig vorgegeben wird. Über diesen zumindest einen mittigen Anspritzpunkt wird ein Einspritzen einer Schmelze des Kunststoffmaterials in ein Spritzgusswerkzeug zumindest zeitweise vor dem Einspritzen der Schmelze in zumindest einen anderen, entlang der Längsachse des Haushaltsgerätebauteils betrachtet außermittig vorgegebenen Anspritzpunkt begonnen. Auch dies ist eine sehr vorteilhafte Vorgehensweise einerseits im Hinblick auf die Lage der Anspritzpunkte, andererseits im Hinblick auf die Reihenfolge, wie die Schmelze an welchen konkreten Anspritzpunkten wann eingespritzt wird. Gerade dann, wenn die Dünnwandigkeit erzeugt wird treten durch diese konkreten Vorgänge die oben genannten Vorteile nochmals verbessert auf.

Es kann vorgesehen sein, dass der zumindest eine mittige Anspritzpunkt auch in Breitenrichtung, die senkrecht zur Längsachse des Haushaltsgerätebauteils orientiert ist, eine mittige Positionierung vorgesehen ist. Dadurch wird auch durch diese dann einen mittigen Anspritzpunkt eine symmetrische Lage vorgegeben, die in Richtung der Längsachse und in Richtung der Breite des Haushaltsgerätebauteils auch eine symmetrische Verteilung der Schmelze ermöglicht.

Es wird insbesondere vorgesehen, dass der zumindest eine mittige Anspritzpunkt und der zumindest eine außermittig vorgegebene Anspritzpunkt auf einer gemeinsamen Gerade liegen, die der Längsachse entspricht oder parallel zu dieser Längsachse verläuft.

Vorzugsweise wird ein Zeitpunkt des Beginns eines Einspritzens in einen außermittig vorgegebenen Anspritzpunkt abhängig von der Art der einzuspritzenden Schmelze und/oder abhängig von der Art der in den zumindest einen mittigen Anspritzpunkt eingespritzten Schmelze und/oder einem entlang der Längsachse bemessenen Abstand zwischen dem zumindest einen mittigen Anspritzpunkt und dem außermittigen Anspritzpunkt und/oder dem Durchmesser des zumindest einen mittigen Anspritzpunkts und/oder dem Durchmesser des außermittigen Anspritzpunkts und/oder von der Anzahl von außermittigen Anspritzpunkten, die auf gleicher Längslage entlang der Längsachse zu diesem außermittigen Anspritzpunkt und/oder den Einspritzdruck der Schmelze in den zumindest einen ersten mittigen Anspritzpunkt und/oder in den vorgesehenen Einspritzdruck in den außermittigen Anspritzpunkt und/oder der Menge der in den zumindest einen mittigen Anspritzpunkt eingespritzten Schmelze und/oder der vorgesehenen Menge der in den außermittigen Anspritzpunkt einzuspritzenden Schmelze und/oder einer Zeitdauer eines Einspritzens einer Schmelze über den mittigen Anspritzpunkt vorgegeben wird.

Zusätzlich oder anstatt dazu kann auch vorgesehen sein, dass ein Zeitpunkt des Endes eines Einspritzens in einen außermittig vorgegebenen Anspritzpunkt abhängig von der Art der einzuspritzenden Schmelze und/oder abhängig von der Art der in den zumindest einen mittigen Anspritzpunkt eingespritzten Schmelze und/oder einem entlang der Längsachse bemessenen Abstand zwischen dem zumindest einen mittigen Anspritzpunkt und dem außermittigen Anspritzpunkt und/oder dem Durchmesser des zumindest einen mittigen Anspritzpunkts und/oder dem Durchmesser des außermittigen Anspritzpunkts und/oder von der Anzahl von außermittigen Anspritzpunkten, die auf gleicher Längslage entlang der Längsachse zu diesem außermittigen Anspritzpunkt und/oder den Einspritzdruck der Schmelze in den zumindest einen ersten mittigen Anspritzpunkt und/oder in den vorgesehenen Einspritzdruck in den außermittigen Anspritzpunkt und/oder der Menge der in den zumindest einen mittigen Anspritzpunkt eingespritzten Schmelze und/oder der vorgesehenen Menge der in den außermittigen Anspritzpunkt einzuspritzenden Schmelze und/oder einer Zeitdauer eines Einspritzens einer Schmelze über den mittigen Anspritzpunkt vorgegeben wird.

Das Kaskaden-Spitzgießen wird dadurch sehr präzise bezüglich der einzubringenden Schmelze und der Anspritzpunkte vollzogen, so dass die Geschwindigkeit der Fließfronten der Schmelze und dem gewünschten Abkühlen an spezifischen Stellen sehr abgestimmt erfolgt und dadurch auch bei unterschiedlichsten Haushaltsgerätebauteilen, insbesondere mit großen eben oder im wesentlichen ebenen Flächenbereichen im Verhältnis zur Gesamtgröße des Haushaltsgerätebauteils die schnelle und formgenaue Fertigung mit relativ kleinen Zuhaltekräften des Spritzgusswerkzeugs ermöglicht ist. Durch diese Flexibilität im Hinblick auf die Betrachtung unterschiedlichster Parameter, die bezüglich dem Zeitpunkt des Beginns des Einspritzens auf einen außermittig vorgegebenen Anspritzpunkt und/oder bezüglich dem Zeitpunkt eines Endes eines Einspritzens der Schmelze in diesen außermittig vorgegebenen Anspritzpunkt berücksichtigt werden können, ergeben sich individuellste Abstimmungsszenarien für die Herstellung eines Haushaltsgerätebauteils. Damit kann im Hinblick auf die Form und insbesondere die Größe des Haushaltsgerätebauteils ein äußerst feinjustiertes und somit genaues Einstellen zumindest von einem dieser Zeitpunkte erfolgen. Der Herstellungspräzision des Haushaltsgerätebauteils im Hinblick auf die homogene Wanddicke wird dadurch vorteilhaft Rechnung getragen. Es lässt sich hier im Hinblick auf Anforderungen, möglichst geringe Zuhaltekräfte beim Spritzgusswerkzeug zu ermöglichen und somit insbesondere herkömmliche Zuhaltekräfte und entsprechende Spritzgusswerkzeuge zu verwenden, ein individuell abgestimmter Einspritzprozess steuern. Unerwünscht hohe Zuhaltekräfte oder Zuhaltekraftspitzen können dadurch vermieden werden.

Durch diese oben genannte vorteilhafte Ausführung kann durch die Feinjustierung des Einspritzvorgangs und die somit entsprechende Steuerung über eine Steuereinheit der Fertigungsanlage auch ein möglicher Ausschussanteil von Haushaltsgerätebauteilen deutlich reduziert werden.

Insbesondere wird zu zumindest dem einen mittigen Anspritzpunkt in eine erste Richtung entlang der Längsachse zumindest ein erster außermittiger Anspritzpunkt vorgegeben und ausgehend von dem zumindest einen mittigen Anspritzpunkt wird in einer zur ersten Richtung entgegengesetzte zweite Richtung entlang der Längsachse des Haushaltsgerätebauteils zumindest ein zweiter, außermittiger Anspritzpunkt vorgegeben. Auf das Einspritzen der Schmelze in den zumindest einen mittigen Anspritzpunkt wird das Einspritzen einer Schmelze in den zumindest einen ersten und den zumindest einen zweiten außermittigen Anspritzpunkt zumindest zeitweise, insbesondere vollständig, gleichzeitig durchgeführt. Dadurch wird der Befüllungsvorgang des Spritzgusswerkzeugs mit der Schmelze in zwei Richtungen, die entgegengesetzt der Längsachse verlaufen, insbesondere synchron durchgeführt. Der Fertigungsfortschritt erfolgt daher in zwei entgegengesetzte Richtungen gleichzeitig, so dass in Richtung der Längsachse betrachtet zu den jeweiligen gegenüberliegenden Enden des herzustellenden Haushaltsgerätebauteils hin auch gleichzeitig das Schmelzmaterial gebracht wird, so dass der Einbringungsprozess und das jeweils sukzessive nachfolgende Aushärten an jeweils zu der Mitte in Richtung der Längsachse betrachtet gegenüberliegenden Stellen hin ebenfalls synchron erfolgt. Auch dadurch werden die oben genannten Vorteile nochmals begünstigt, da die Fließfronten in zwei entgegengesetzte Richtungen verlaufen und aufgrund der erfolgenden Einbringens diese Richtung an diesen Stellen und dem dann jeweils erfolgenden Aushärten auch hier wiederum die Zuhaltekräfte des Spritzgusswerkzeugs möglichst klein gehalten werden können.

In einer vorteilhaften Ausführung wird für das Kaskaden-Spritzgießen in Richtung der Längsachse des Haushaltsgerätebauteils betrachtet von der Mehrzahl von Anspritzpunkten zumindest zwei Anspritzpunkte auf gleicher Längslage und an gegenüberliegenden Seiten der Längsachse und somit senkrecht zur Längsachse vorgegeben, wobei über diese zumindest zwei entlang der Längsachse gleich liegenden Anspritzpunkte gleichzeitig eine Schmelze des Kunststoffmaterials in ein Spritzgusswerkzeug eingespritzt wird. Dadurch wird auch im Hinblick auf die senkrecht zur Längsachse bemessene Breite des Haushaltsgerätebauteils eine Verbesserung der Herstellung erzielt, und die bereits oben genannten Vorteile sind hier ebenfalls gegeben.

Gerade bei breiteren Haushaltsgerätebauteilen kann insbesondere bezüglich breiteren Flächenbereichen durch diese in Breitenrichtung mehrere Anspritzpunkte auch wiederum das Einbringen des Schmelzmaterials, das Aushärten des Schmelzmaterials und das erforderliche Nachspritzen verbessert erfolgen und diesbezüglich dann mit möglichst kleinen und minimierten Zuhaltekräften des Spritzgusswerkzeugs.

Es wird vorgesehen, dass das Haushaltsgerätebauteil durch die Kombination des Dünnwandspritzgießens und des Kaskaden-Spritzgießens, welches gleichzeitig durchgeführt wird, mit einer Wanddicke kleiner 1,5 mm und besonders vorteilhaft zwischen 0,6 mm und 1 mm hergestellt wird. Bei herkömmlichen Spritzgussmöglichkeiten können allenfalls minimale Wanddicken von 2,5 mm hergestellt werden. Durch die Erfindung beziehungsweise vorteilhafte Ausführungen davon kann gerade bei sehr großen Haushaltsgerätebauteilen mit insbesondere relativ großen, ebenen Flächenbereichen oder im Wesentlichen ebenen Flächenbereichen eine erhebliche Wanddickenreduktion erzielt werden und somit überhaupt erst ein Dünnwandbereich ausgebildet werden, wobei die Dünnwandigkeit hier sehr gering ausfällt. Dies wirkt gerade bei solchen spezifischen Haushaltsgerätebauteilen mit dann mehreren Anspritzpunkten des Kaskaden-Spritzgießens besonders vorteilhaft auf die erforderlichen Zuhaltekräfte des Spritzgusswerkzeugs nicht nur beim primären Einspritzen der Schmelze, sondern auch beim Aushärten bzw. Abkühlen und insbesondere auch beim ggf. nachfolgenden Nachspritzen aufgrund des Schrumpfens der ausgehärteten Schmelze.

Nicht nur durch diese vorteilhafte Ausführung kann auch aufgrund der Dünnwandigkeit dass Abkühlen schneller erfolgen, wodurch auch ein erforderliches Nachspritzen zeitnah erfolgen kann, sondern es kann aufgrund dieser Reduktionszeit der Abkühlung dann auch der Zuhalteprozess des Spritzgusswerkzeugs zeitlich reduziert werden, was wiederum Vorteile auf die Anforderungen auf das Spritzgusswerkzeug im Hinblick auch auf den Energieverbrauch der Fertigung hat, so dass auch der Fertigungsvorgang energieeffizienter erfolgen kann.

Vorzugsweise ist vorgesehen, dass für das Kaskaden-Spritzgießen zumindest vier Anspritzpunkte vorgegeben werden. Abhängig von der Ausgestaltung des zu fertigenden Haushaltsgerätebauteils und insbesondere von dessen Größe, vorzugsweise von dessen Größe des ebenen oder im Wesentlichen ebenen Flächenbereichs, kann dann die Anzahl der Anspritzpunkte auch größer 10, insbesondere größer 30, insbesondere größer 50, insbesondere größer 70, insbesondere größer 90 und gegebenenfalls auch bis zu 100 Anspritzpunkten oder mehr vorgegeben werden.

In einer besonders vorteilhaften Ausführung wird als Haushaltsgerätebauteil ein wannenförmiges Haushaltsgerätebauteil hergestellt. Insbesondere wird in dem Zusammenhang eine Innenverkleidung beziehungsweise eine Innentür einer zum Verschließen eines Aufnahmeraums für Lebensmittel ausgebildeten Tür eines Haushaltsgeräts hergestellt. Gerade für diese spezifischen Haushaltsgerätebauteile kann somit ein im Hinblick auf den Fertigungsablauf verbessertes Verfahren bereitgestellt werden. Bezüglich der Verbesserungen darf auf die bereits oben genannten Vorteile nochmals verwiesen werden.

In einer vorteilhaften Weise wird ein Wannenboden des wannenförmigen Haushaltsgerätebauteils mit einem viereckigen Flächenbereich mit einer ersten Seitenlänge, insbesondere einer Breite, von zumindest 30cm und/oder einer zweiten Seitenlänge, insbesondere einer Höhe, von zumindest 25cm hergestellt. Derartige Haushaltsgeräte mit somit relativ großen Flächenbereichen können durch das erfindungsgemäße Verfahren oder eine vorteilhafte Ausgestaltung davon bezüglich der Reduktion der Zeitdauer des Herstellungsprozesses insbesondere der Abkühlzeit der Schmelze, bezüglich der Anforderungen an die Zuhaltekräfte des Spritzgusswerkzeugs als auch im Hinblick auf die Konturenscharfe und vollständige Einbringung der Schmelze auch in Randbereichen mit diesbezüglich geringeren Einspritzdrücken der Schmelze erreicht werden.

Vorzugsweise werden Anspritzpunkte für das Kaskaden-Spritzgießen abhängig von der Größe des herzustellenden wannenförmigen Haushaltsgerätebauteils vorgegeben.

Insbesondere werden Anspritzpunkte dieses Kaskaden-Spritzgießens abhängig von der Größe des ebenen oder im Wesentlichen ebenen Flächenbereichs eines Wannenbodens des Haushaltsgerätebauteils vorgegeben. Da gerade diese geometrisch spezifischen Sonderbereiche eines derartigen Haushaltsgerätebauteils bezüglich der Einspritzstellen, der Einspritzdrücke, der Verteilung der Schmelze im Hinblick auf das gegebenenfalls zu schnelle oder zu langsame und somit unerwünschte Aushärten und dem gegebenenfalls erforderlichen Anstieg der Zuhaltekräfte des Spritzgusswerkzeugs wesentlich sind, kann hierauf sehr situationsbedingt reagiert werden und durch die vorteilhafte Ausführung auch hier einerseits die Dünnwandigkeit und andererseits durch die gezielten örtlichen Anspritzpunkte dem entgegengewirkt werden.

Bei einer weiteren vorteilhaften Ausführung wird vorgesehen, dass die Anzahl der Anspritzpunkte entlang einer Längsachse des Haushaltsgerätebauteils und/oder die Lage der Anspritzpunkte abhängig von der Größe des herzustellenden wannenförmigen Haushaltsgerätebauteils vorgegeben wird. Auch hier wird diese Vorgabe insbesondere abhängig von der Größe des ebenen oder zumindest im Wesentlichen ebenen Flächenbereichs eines Wannenbodens des Haushaltsgerätebauteils vorgegeben. Die bereits oben für die anderweitigen Ausgestaltungen dargelegten Vorteile gelten hier entsprechend.

In einer weiteren vorteilhaften Ausführung wird vorgesehen, dass die Anzahl der Anspritzpunkte paarweise und an gegenüberliegenden Seiten zu einer Längsachse und somit in Breitenrichtung zur Längsachse des wannenförmigen Haushaltsgerätebauteils vorgegeben wird und die Anzahl dieser Anspritzpunkt-Paare abhängig von der Größe des herzustellenden wannenförmigen Haushaltsgerätebauteils vorgegeben wird. Auch bei dieser Ausgestaltung wird diese Anzahl der Anspritzpunkt-Paare abhängig von der Größe des ebenen oder im Wesentlichen ebenen Flächenbereichs eines Wannenbodens des Haushaltsgerätebauteils vorgegeben. Auch hier gelten dann wiederum die bereits oben genannten Vorteile entsprechend.

In einer vorteilhaften Ausführung wird eine Zuhaltekraft zum Zuhalten eines Spritzgusswerkzeugs beim Spritzgießen des Haushaltsgerätebauteils mit der Kombination und somit dem gleichzeitigen Durchführen des Dünnwandspritzgießens und dem Kaskaden-Spritzgießen auf einen Wert kleiner oder gleich einem Gewicht von 1700 Tonnen entsprechend begrenzt. Insbesondere ist diese Zuhaltekraft auf einen Wert kleiner oder gleich einem Gewicht von 1600 Tonnen entsprechend begrenzt. Dies ist eine sehr vorteilhafte Ausführung, da somit Spritzgusswerkzeuge eingesetzt werden können, bei denen diese genannten konkreten Zuhaltekräfte dann auch insbesondere als Maximalzuhaltekräfte bereitgestellt werden können. Dadurch können Spritzgusswerkzeuge für die Herstellung verwendet werden, die wesentlich kleiner und auch kostengünstiger in der Beschaffung und auch im Betrieb im Vergleich zu Spritzgusswerkzeugen sind, die deutlich höhere Zuhaltekräfte ermöglichen. Da hier gerade diese genannten Kosten für Spritzgusswerkzeuge mit Zuhaltekräften nicht nur linear sondern stärker dazu ansteigen, fließen derartige Nachteile auch wesentlich in die Produktionskosten und somit die Umsetzungsmöglichkeit in ein Fertigungsverfahren mit derartigen Spritzgusswerkzeugen ein. Gerade durch die Erfindung oder eine vorteilhafte Ausgestaltung davon ist es nunmehr auch ermöglicht, deutlich kostengünstigere Spritzgusswerkzeuge mit niedrigeren maximalen Zuhaltekräfte zu verwenden und dennoch die oben genanten und insbesondere sehr großen und mit großen ebenen oder im Wesentlichen ebenen Flächenbereichen charakterisierten Haushaltsgerätebauteile herzustellen. Dies war mit der bisherigen Spritzgusstechnik nicht möglich. Die Kombination der Dünnwandspritzgießtechnik mit der Kaskaden-Spritztechnik ermöglicht gerade bei diesbezüglich genannten spezifischen, insbesondere wannenförmigen Haushaltsgerätebauteilen Zuhaltekräfte derart zu reduzieren, dass herkömmliche und darüber hinaus sogar Spritzgussmaschine mit kleineren Zuhaltekräften eingesetzt werden können.

Es wird durch diese Erfindung auch ermöglicht, dass diese niedrigen Zuhaltekräfte, insbesondere kleiner oder gleich einem Wert entsprechend einem Gewicht von 1700 Tonnen nicht nur für den primären Einspritzvorgang der Schmelze ausreichen, sondern auch dann für das Zuhalten während des Abkühlens und auch dem möglicherweise erforderlichen Nachspritzen der Schmelze aufgrund der Schrumpfung bei dem Abkühlen.

Insbesondere wird, wie bereits oben erwähnt, als ein Haushaltsgerätebauteil eine Innenverkleidung beziehungsweise eine Innentür einer Tür für ein Haushaltskältegerät hergestellt. Diese weisen üblicherweise aufgrund ihrer Wannenform einen relativ großen ebenen oder im Wesentlichen ebenen Flächenbereich in Form des Wannenbodens auf, so dass hier die eingangs genannten Problemstellungen besonders zum Tragen kommen, andererseits durch die erfindungsgemäße Lösung eine vorteilhafte Herstellung auch dieser spezifischen Haushaltsgerätebauteile nun ermöglicht ist und zwar im Rahmen des Spritzgießens.

Des Weiteren betrifft die Erfindung auch ein Haushaltsgerätebauteil, welches gemäß der Erfindung oder einer vorteilhaften Ausgestaltung davon hergestellt ist. Durch das erfindungsgemäße Verfahren ist auch nunmehr bei diesen spezifischen Haushaltsgerätebauteilen eine deutlich reduzierte Wanddicke, nämlich eine Dünnwand ermöglicht und dennoch eine ausreichende vollständige Füllung mit der Schmelze und eine ausreichende Nachdruckwirkung bei schneller Herstellung ermöglicht. Gerade für herzustellende Haushaltsgerätebauteile, bei denen die maximalen Fließwege der einzubringenden Schmelze oberhalb von 200 mm liegen, kann nunmehr auch die Wanddicke deutlich kleiner als 1,5 mm ermöglicht werden. Wird beispielsweise ein sehr leicht fließender Kunststoff als Schmelze verwendet, so kann ein Abstand von Anspritzpunkten entlang der Längsachse des Haushaltsgerätebauteils betrachtet und/oder senkrecht zu der Längsachse und somit in Breitenrichtung des Haushaltskältegeräts betrachtet größer vorgenommen werden. Dadurch wird die erforderliche Anzahl von Anspritzpunkten bezogen auf eine feste Bauteilgröße reduziert.

Durch das gleichzeitige beziehungsweise auch kombinierte Kaskaden-Spritzgießen wird die Befüllung des Spritzgusswerkzeugs mit der Schmelze auch bei dieser Dünnwandtechnik nicht gleichzeitig über alle Anspritzpunkte durchgeführt, sondern eben nacheinander und somit kaskadiert. Die einzelnen Kaskadenstufen werden dabei als Sequenzzonen bezeichnet.

Für das Einbringen der Schmelze in das Spritzgusswerkzeug und somit den Füllvorgang können, wie bereits oben angesprochen, vielfältigste unterschiedliche und sehr situationsbezogene, für das jeweils herzustellende Haushaltsgerätebauteil spezifizierte Aktivierungen und Deaktivierungen der einzelnen Sequenzzonen vorgenommen werden. Die Steuerung der Sequenzzonen kann beispielsweise auch über das Einspritzvolumen, den Einspritzweg, die Einspritzzeit, den Einspritzdruck oder die Position der Fließfront der Schmelze in der Kavität beziehungsweise dem Spritzgusswerkzeug erfolgen.

In einer vorteilhaften Ausführung wird die Bestimmung der Position der Fließfront in dem Spritzgusswerkzeug beispielsweise über die Messung des lokalen Werkzeuginnendrucks oder der lokalen Werkzeugwandtemperatur durchgeführt.

Dazu können ein Sensor oder entsprechende Sensoren an der Oberfläche des Spritzgusswerkzeugs vorgesehen sein. Wird beispielsweise dann ein vorgegebener Temperaturschwellwert überschritten, so kann auf die genaue Lage der Fließfront innerhalb des Spritzgusswerkzeugs geschlossen werden. Durch die Erfindung sind die erzielbaren reinen Wanddicken und somit die Dünnwandausgestaltung unabhängig von der Größe des zu fertigenden Haushaltsgerätebauteils. Darüber hinaus kann auch vorgesehen, dass Oberflächen des herzustellenden Haushaltsgerätebauteils komplett oder zumindest bereichsweise individuell strukturiert werden können, wobei hier beispielsweise unterschiedliche Glanzgrade oder matte Oberflächen erzeugt werden können. Ein Sensor kann auch in der Wand des Spritzgusswerkzeugs integriert und somit vollständig von dem Material der Wand umgeben sein.

Es ist bevorzugt vorgesehen, dass die Lage einer Fließfront abhängig von einem oder mehreren Einspritzzeiten an einem oder mehreren Anspritzpunkten bestimmt wird.

Vorzugsweise ist wird das Haushaltsgerätebauteil zumindest bereichsweise aus PP (Polypropylen) hergestellt, insbesondere vollständig aus PP hergestellt. Gerade dieses Material ermöglicht bei der Dünnwandigkeit und den mehreren Anspritzpunkten mit seinen Fließeigenschaften - PP ist leicht fließend - die genannten Vorteile besonders zu erfüllen, insbesondere, wenn große Haushaltsgerätebauteile mit großen eben bzw. im wesentlichen ebenen Flächenbereichen erzeugt werden.

In einer weiteren, sehr vorteilhaften Ausführung kann auch vorgesehen sein, dass das Haushaltsgerätebauteil nicht nur aus einem einzigen Kunststoffmaterial hergestellt wird, sondern aus zumindest zwei verschiedenen Kunststoffmaterialien gefertigt wird. Ein derartiges dann zumindest 2K-Haushaltsgerätebauteil kann gerade im Hinblick auf die unterschiedlichen Anspritzpunkte sehr präzise aus den dann jeweils örtlich erforderlichen unterschiedlichen Kunststoffmaterialien erzeugt werden.

Durch das erfindungsgemäße Verfahren oder eine vorteilhafte Ausgestaltung davon können nicht nur geometrische, sondern auch von der Größe her vielfältigste Haushaltsgerätebauteile erzeugt werden. Beispielsweise können kleine dünnwandige Haushaltsgerätebauteile mit relativ großen und ebenen oder im Wesentlichen ebenen Flächenbereichen erzeugt werden. So können diese Haushaltsgerätebauteile mit einer Höhe bis zu 30 cm, einer Breite bis zu 15 cm und einer Wanddicke kleiner 1 mm, insbesondere zwischen 0,5 mm und 0,9 mm, insbesondere 0,8 mm, hergestellt werden. Es können jedoch aber auch diesbezüglich noch größere Haushaltsgerätebauteile hergestellt werden, die mit einer Höhe von 180 cm oder größer ausgebildet werden können, mit einer Breite zwischen 60 cm und 90 cm, insbesondere 80 cm, und insbesondere einer Wanddicke kleiner 1 mm, vorzugsweise zwischen 0,5 mm und 0,9 mm, insbesondere 0,8 mm, hergestellt werden. Es sind jedoch auch jegliche Zwischenwerte der genannten Höhen und/oder Breiten und/oder Wanddicken als weitere Ausführungen alleine oder in Kombination möglich.

Durch die Erfindung wird es, wie bereits oben erwähnt, ermöglicht, eine signifikante Reduzierung der ansonsten für derartige Bauteile erforderlichen Schließkräfte beziehungsweise Zuhaltekräfte der Spritzgussmaschine beziehungsweise des Spritzgusswerkzeugs zu erreichen. Bei konventionellen herkömmlichen Spritzgusstechniken wirkt der Fülldruck beziehungsweise der Nachdruck gleichzeitig auf der gesamten projizierten Fläche des herzustellenden Bauteils. Für die Herstellung größerer Bauteile mittels des konventionellen Spritzgießens sind daher Spritzgießmaschinen mit sehr großen Schließkräften erforderlich. Durch das erfindungsgemäße Verfahren kann die erforderliche Schließkraft bei gleicher Bauteilgröße bis zu 80 Prozent reduziert werden, insbesondere bei wannenartigen Haushaltsgerätebauteilen, die einen im Vergleich zum restlichen Bereich des Haushaltsgerätebauteils sehr großen ebenen oder im Wesentlichen ebenen Flächenbereich aufweisen.

Aufgrund der darüber hinaus einhergehenden erzeugten nur geringen Wanddicken und somit der Dünnwandigkeit erstarren die zuerst gefüllten Bauteilbereiche schon während des Füllvorgangs. Dies ist ein wesentlicher Vorteil. Zum Zeitpunkt der vollständigen Füllung des Spritzgusswerkzeugs mit der Schmelze sind bereits größere Bereiche des herzustellenden Haushaltsgerätebauteils erstarrt. Die Innendrücke wirken jedoch nur in den Bereichen, in denen noch die Schmelze vorliegt und somit das flüssige Kunststoffmaterial noch vorhanden ist. Somit wirkt der Innendruck nur auf einem Teilbereich der gesamten projizierten Bauteilfläche. Um ein Einfallen des Bauteils oder einzelner Bauteilbereiche durch die Wärmeschwindung des Kunststoffs beim Abkühlen zu verhindern, wird beim konventionellen Spritzgießen nach der vollständigen Füllung das herzustellende Bauteil mit Nachdruck beaufschlagt.

Bei der Erfindung mit dem kombinierten Dünnwandspritzgießen und dem Kaskaden-Spritzgießen ist dieser Nachdruck nach der vollständigen Füllung für die bereits erstarrten Bauteilbereiche wirkungslos. Der Nachdruck für diese Bauteilbereiche wird bereits bei der Bauteilfüllung durch den Fülldruck gewährleistet, was ein weiterer wesentlicher Vorteil der Erfindung ist. Der Fülldruckt wirkt in diesem Fall zum einen bei der Füllung quasi nach vorne und somit in Richtung der sich ausbreitenden Fließfront, und als Nachdruck quasi nach hinten. Die signifikante Reduzierung der Schließkräfte ist nur durch die Kombination von Dünnwandtechnik und Kaskaden-Spritzgießen für flächige Bauteilgeometrien der herzustellenden Haushaltsgerätebauteile gegeben.

Durch die Dünnwanderzeugung sind die Kühlzeiten drastisch reduziert und durch die flächigen Bauteilgeometrien in Verbindung mit den zeitlich gestaffelten Anspritzpunkten ist eine gleichzeitige Füllwirkung als auch eine Nachdruckwirkung ermöglicht. Es kann also während des Herstellungsverfahrens und somit zu Zeitpunkten, zu denen das gesamte Kunststoffmaterial noch nicht eingebracht ist, an gewissen Stellen über gewisse Anspritzpunkte noch das primäre Einbringen der Schmelze erfolgen, und gleichzeitig an anderen Stellen, bei denen die zuvor eingebrachte Schmelze bereits abgekühlt ist, ein Nachdruck durchgeführt werden.

Darüber hinaus ist es durch die Erfindung auch ermöglicht, dass für eine Familie von Haushaltsgerätebauteilen, die sich in dem Zusammenhang formgleich darstellen daher nur in der Größe unterscheiden, der grundlegende Aufbau des Spritzgusswerkzeugs genutzt werden kann. Denn bei entsprechenden Haushaltsgerätebauteilen mit unterschiedlichen Dimensionen kann die Anzahl der genutzten Anspritzpunkte des Spritzgusswerkzeugs frei gewählt werden. So ist es beispielsweise dann auch möglich, für ein diesbezüglich kleineres Haushaltsgerätebauteil dieser Familie nur die Hälfte der vorhandenen Anspritzpunkte zu nutzen. Für ein Haushaltsgerätebauteil der Bauteilfamilie, welches demgegenüber größer ist, können dann mehrere Anspritzpunkte dieses Stammwerkzeugs genutzt und bedient werden. Für eine Bauteilfamilie ist es somit denkbar, dass nur ein Spritzgießwerkzeug mit mehreren Wechselplatten erforderlich ist, anstatt mehrerer kompletter separater Spritzgießwerkzeuge.

Durch die Erfindung ist es somit auch ermöglicht, dass neben den technischen Vorteilen auch die Stückkosten reduziert werden können. Darüber hinaus sind eine höhere Bauteilqualität sowie ein höherer konstruktiver Freiheitsgrad inklusive mit mehreren Designoptionen für zusätzliche Elemente gegeben. So können bezüglich der höheren Freiheitsgrade individuelle konstruktive Merkmale einfacher und filigraner als auch in Formvarianten gestaltet werden, als dies beispielsweise mit einem Thermoformen ermöglicht ist. So können beispielsweise integrierte erhaben abstehende Nocken filigraner gestaltet werden. Es kann in dem Zusammenhang beispielsweise vorgesehen sein, dass die Nocke nicht mehr als komplette erhabene höckerartige Struktur realisiert ist, sondern lediglich die Erhebung durch einen umlaufenden filigranen Rand beziehungsweise eine umlaufende Konturenlinie realisiert ist. Diese kann dann mit gleicher Stabilität und mit mindestens gleicher Formpräzision erzeugt werden.

Mit Angaben "oben", "unten", "vorne", "hinten, "horizontal", "vertikal", "Tiefenrichtung", "Breitenrichtung", "Höhenrichtung" etc. sind die bei bestimmungsgemäßen Gebrauch und bestimmungsgemäßem Anordnen des Geräts und bei einem dann vor dem Gerät stehenden und in Richtung des Geräts blickenden Beobachter gegebenen Positionen und Orientierungen angegeben.

Ausführungsbeispiele der Erfindung werden nachfolgend anhand schematischer Zeichnungen näher erläutert. Es zeigen:
- Fig. 1: eine perspektivische Darstellung eines Ausführungsbeispiels eines erfindungsgemäßen Haushaltsgeräts mit einer Ausführungsform eines erfindungsgemäßen Haushaltsgerätebauteils;
- Fig. 2: eine perspektivische Darstellung eines ersten Ausführungsbeispiels eines Haushaltsgerätebauteils mit symbolisch dargestellten Anspritzpunkten;
- Fig. 3: eine perspektivische Darstellung eines weiteren Ausführungsbeispiels eines Haushaltsgerätebauteils mit einer zu Fig. 2 unterschiedlichen Größe und zu Fig. 2 unterschiedlicher Anzahl von Anspritzpunkten;
- Fig. 4: eine beispielhafte Darstellung einer Ausführung zur Fertigung eines Haushaltsgerätebauteils, bei welchem mit dem erfindungsgemäßen Verfahren über mehrere Anspritzpunkte in Reihe entlang einer Längsachse eines zu fertigenden Haushaltsgerätebauteils Schmelze zu unterschiedlichen Zeitpunkten eingebracht wird, wobei in Fig. 4 dann auch die jeweiligen Fließfronten dieser Schmelze gezeigt sind;
- Fig. 5: eine Darstellung gemäß Fig. 4, wobei im Unterschied zu Fig. 4 das Einbringen der Schmelze in die Anspritzpunkte nicht in eine Richtung erfolgt, sondern in zwei entgegengesetzte Richtungen erfolgt;
- Fig. 6: eine Darstellung gemäß Fig. 4, bei welcher im Unterschied zu Fig. 4 jedoch zwei parallele Reihen von Anspritzpunkten ausgebildet werden;
- Fig. 7: eine Darstellung gemäß Fig. 5, bei welcher im Unterschied zu Fig. 5 ebenfalls zwei parallele Reihen von Anspritzpunkten vorgegeben werden;
- Fig. 8: eine perspektivische Darstellung eines Teilbereichs eines hergestellten Haushaltsgerätebauteils mit einem integrierten Zusatzelement in Form einer Nocke; und
- Fig. 9: eine Darstellung gemäß Fig. 8 mit entsprechend alternativ hergestellter Nocke.

In den Figuren werden gleiche oder funktionsgleiche Elemente mit den gleichen Bezugszeichen versehen.

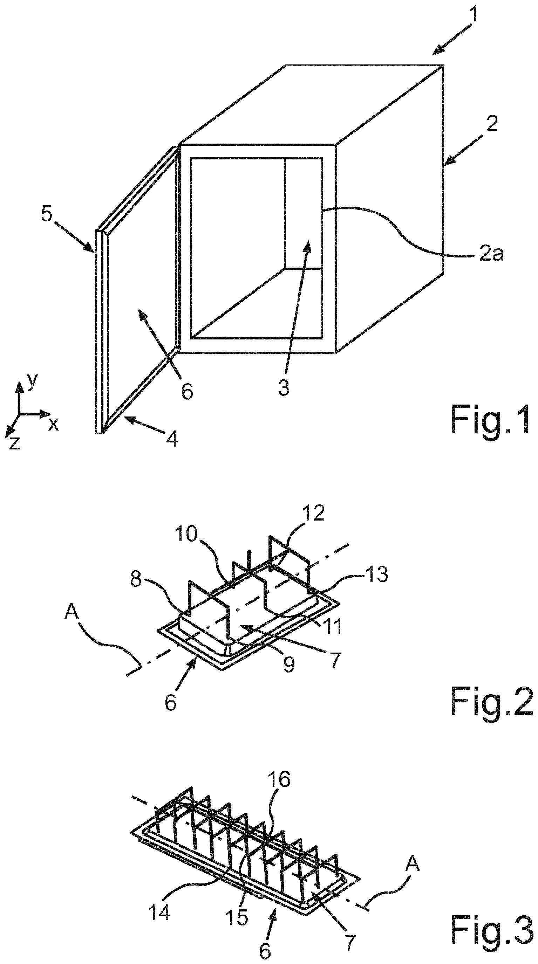

In Fig. 1 ist in einer perspektivischen vereinfachten Darstellung ein Haushaltsgerät 1 gezeigt, welches ein Haushaltskältegerät ist und beispielsweise ein Kühlgerät oder ein Gefriergerät oder ein Kühl-Gefrier-Kombigerät sein kann. Das Haushaltsgerät 1 ist zur Aufnahme von Lebensmitteln ausgebildet und weist ein Gehäuse 2 auf, in dem ein entsprechender Aufnahmeraum 3 ausgebildet ist. Der Aufnahmeraum 3 ist durch Wände eines Innenbehälters 2a begrenzt. Frontseitig ist der Aufnahmeraum 3 durch eine Tür 4 verschließbar, welche schwenkbar an dem Gehäuse 2 angeordnet ist. Die Tür 4 ist mehrteilig aufgebaut und weist eine Außentür 5 und eine Innentür auf, die eine Innenverkleidung 6 darstellt. Die Innenverkleidung 6 ist ein sichtseitiges Bauteil der Tür 4 und somit ein außenliegendes Bauteil. Im geschlossenen Zustand der Tür 4 ist diese Innenverkleidung 6 dem Aufnahmeraum 3 zugewandt. Diese Innenverkleidung 6 ist einstückig aus Kunststoff ausgebildet und stellt ein wannenartiges Haushaltsgerätebauteil dar. Zwischen der Außentür 5 und der Innenverkleidung 6 ist zumindest bereichsweise ein thermisch isolierendes Material, insbesondere ein Isolationsschaum, eingebracht, der nicht sichtseitig vorliegt, sondern durch die Außentür 5 und die Innenverkleidung 6 verdeckt ist.

An der Innenverkleidung 6 können darüber hinaus auch noch andere Komponenten, beispielsweise zumindest ein Türabsteller, welcher nicht dargestellt ist, angeordnet sein.

Das Haushaltsgerätebauteil in Form der wannenartigen Innenverkleidung 6 wird durch ein Spritzgießen hergestellt, wobei bei diesem Spritzgießen zumindest zeitweise während des Herstellungsprozesses eine Kombination des Dünnwandspritzgießens und dem Kaskaden-Spritzgießen durchgeführt wird. Das Dünnwandspritzgießen wird dabei erfindungsgemäß mit einem Wanddicken-Fließweg-Verhältnis zwischen größer 1:200 und 1:300 durchgeführt.

Wie aus der schematischen Darstellung in Fig. 1 bereits zu erkennen ist, und bei dem Ausführungsbeispiel in Fig. 2, bei dem diese Innenverkleidung 6 liegend gezeigt ist, vorgesehen ist, ist ein überwiegend großer Bereich dieser Ausmaße des Haushaltsgerätebauteils ein ebener oder im Wesentlichen ebener Flächenbereich, der hier durch einen Wannenboden 7 gebildet ist.

Wie in Fig. 2 dazu angedeutet ist, wird bei diesem Herstellen durch Spritzgießen und zwar durch Kombination der Dünnwandspritzgießtechnik und dem Kaskaden-Spritzgießen eine Mehrzahl von Anspritzpunkten vorgegeben. Im gezeigten Ausführungsbeispiel sind hier sechs Anspritzpunkte 8, 9, 10, 11, 12 und 13 vorgegeben. So ist es hier vorgesehen, dass entlang einer Längsachse A des herzustellenden Haushaltsgerätebauteils betrachtet, drei Anspritzpunkte 8, 10, 12 in einer Reihe, die parallel zur Achse A verläuft, vorgegeben werden. Darüber hinaus werden drei weitere Anspritzpunkte 9, 11 und 13 in einer dazu parallelen Reihe, die darüber hinaus auch parallel zur Längsachse A ist, vorgegeben. Darüber hinaus ist vorgesehen, dass jeweils paarweise zwei Anspritzpunkte gegenüberliegend zur Längsachse A und symmetrisch dazu angeordnet sind und in dem Zusammenhang dann jeweils auf gleicher Längslage beziehungsweise auf gleichem Abschnitt entlang der Längsachse A vorgegeben werden. So ist ein erstes Anspritzpunkt-Paar durch die Anspritzpunkte 8 und 9, ein zweites Anspritzpunkt-Paar durch die Anspritzpunkte 10 und 11 und ein drittes Anspritzpunkt-Paar durch die Anspritzpunkte 12 und 13 vorgegeben.

Insbesondere wird vorgesehen, dass die Anspritzpunkte 10 und 11 im Hinblick auf die Länge des Haushaltsgerätebauteils und somit der Innenverkleidung 6 entlang der Längsachse A betrachtet mittig angeordnet sind. Sie stellen somit mittige Anspritzpunkte 10 und 11 dar. Darüber hinaus sind die Anspritzpunkte 8 und 9 dann erste außermittige Anspritzpunkte und die Anspritzpunkte 12 und 13 zweite außermittige Anspritzpunkte. Der Abstand in Richtung der Längsachse A betrachtet zwischen dem mittigen Anspritzpunkt 10 und den außermittigen Anspritzpunkten 8 und 12 ist gleich. Entsprechendes gilt für den Abstand der außermittigen Anspritzpunkte 9 und 13 zum mittigen Anspritzpunkt 11. Wie gemäß der Darstellung in Fig. 2 auch zu erkennen ist, werden die örtlichen Positionen der Anspritzpunkte 8 bis 13 so gewählt, dass sie noch innerhalb des Flächenbereichs des Wannenbodens 7 vorliegen.

Das Herstellen dieser Innenverkleidung 6 gemäß Fig. 2 erfolgt insbesondere dahingehend, dass zunächst das Einspritzen der Schmelze über die mittigen Anspritzpunkte 10 und 11 gleichzeitig erfolgt. Zu dieser Zeitphase wird das Einspritzen über die außermittigen Anspritzpunkte 8, 9 und 12, 13 noch nicht vollzogen.

Abhängig von der Ausbreitung der Fließfront der Schmelze, welche über die Einspritzpunkte 10 und 11 eingebracht wird, wird dann nachfolgend das Einspritzen über die außermittigen Anspritzpunkte 8 und 9 sowie 12 und 13 durchgeführt.

Insbesondere wird ein Zeitpunkt des Beginns eines Einspritzens in einen außermittig vorgegebenen Anspritzpunkt 8, 9, 12, 13 abhängig von der Art der einzuspritzenden Schmelze und/oder abhängig von der Art der in den zumindest einen mittigen Anspritzpunkt eingespritzten Schmelze und/oder einem entlang der Längsachse bemessenen Abstand zwischen dem zumindest einen mittigen Anspritzpunkt und dem außermittigen Anspritzpunkt und/oder dem Durchmesser des zumindest einen mittigen Anspritzpunkts und/oder dem Durchmesser des außermittigen Anspritzpunkts und/oder von der Anzahl von außermittigen Anspritzpunkten, die auf gleicher Längslage entlang der Längsachse zu diesem außermittigen Anspritzpunkt und/oder den Einspritzdruck der Schmelze in den zumindest einen ersten mittigen Anspritzpunkt und/oder in den vorgesehenen Einspritzdruck in den außermittigen Anspritzpunkt und/oder der Menge der in den zumindest einen mittigen Anspritzpunkt eingespritzten Schmelze und/oder der vorgesehenen Menge der in den außermittigen Anspritzpunkt einzuspritzenden Schmelze und/oder einer Zeitdauer eines Einspritzens einer Schmelze über den mittigen Anspritzpunkt vorgegeben.

Zusätzlich oder anstatt dazu wird ein Zeitpunkt des Endes eines Einspritzens in einen außermittig vorgegebenen Anspritzpunkt 8, 9, 12, 13 abhängig von abhängig von der Art der einzuspritzenden Schmelze und/oder abhängig von der Art der in den zumindest einen mittigen Anspritzpunkt eingespritzten Schmelze und/oder einem entlang der Längsachse bemessenen Abstand zwischen dem zumindest einen mittigen Anspritzpunkt und dem außermittigen Anspritzpunkt und/oder dem Durchmesser des zumindest einen mittigen Anspritzpunkts und/oder dem Durchmesser des außermittigen Anspritzpunkts und/oder von der Anzahl von außermittigen Anspritzpunkten, die auf gleicher Längslage entlang der Längsachse zu diesem außermittigen Anspritzpunkt und/oder den Einspritzdruck der Schmelze in den zumindest einen ersten mittigen Anspritzpunkt und/oder in den vorgesehenen Einspritzdruck in den außermittigen Anspritzpunkt und/oder der Menge der in den zumindest einen mittigen Anspritzpunkt eingespritzten Schmelze und/oder der vorgesehenen Menge der in den außermittigen Anspritzpunkt einzuspritzenden Schmelze und/oder einer Zeitdauer eines Einspritzens einer Schmelze über den mittigen Anspritzpunkt vorgegeben.

In Fig. 3 ist ein Ausführungsbeispiel eines als Innenverkleidung 6 ausgebildeten wannenförmigen Haushaltsgerätebauteils gezeigt, welches im Unterschied zur Ausführung gemäß Fig. 2 größer ist, insbesondere in der Länge entlang der Längsachse A und gegebenenfalls auch in der Breite und somit in einer Richtung senkrecht zur Längsachse A. Die Höhe bemisst sich dabei gemäß der Darstellung in Fig. 1 in y-Richtung, wobei sich die Breite bei geschlossener Tür 4 in x-Richtung bemisst.

Bei der Ausführung in Fig. 3 ist aufgrund der Größe, insbesondere des ebenen oder im Wesentlichen ebenen Flächenbereichs entsprechend der Wannenboden 7 unterschiedlich. Hier sind deutlich mehr Anspritzpunkte als bei der Ausführung in Fig. 2 vorhanden. Im Ausführungsbeispiel sind hier 27 Anspritzpunkte vorgesehen. Es sind hier drei mittige Anspritzpunkte 14, 15 und 16 vorgesehen, die auf gleicher axialer Lage in Richtung der Längsachse A betrachtet nebeneinander angeordnet sind. So sitzt ein zentraler mittiger Anspritzpunkt 15 auf der Längsachse A und ist somit mittig in Breitenrichtung des Haushaltsgerätebauteils und somit der herzustellenden Innenverkleidung 6 vorgegeben. Die beiden weiteren mittigen Anspritzpunkte 14 und 16 sind demgegenüber in Breitenrichtung im gleichen Abstand zum zentralen mittigen Anspritzpunkt 15 vorgegeben. Die dann weiteren 24 außermittigen Anspritzpunkte sind in ihren zueinander angeordneten Reihen parallel zur Längsachse A und im gleichen Abstand zueinander vorgegeben. Es sind auch bei den außermittigen Anspritzpunkten jeweils drei derartige in einer gleichen Längslage und somit gleicher Achslage auf der Längsachse A zueinander angeordnet. Alle linksseitigen außermittigen Anspritzpunkte und somit diejenigen Anspritzpunkte, die links zur Längsachse A vorgegeben werden, sind auch wiederum in einer Reihe, die parallel zur Längsachse A verläuft, vorgegeben. Entsprechendes ist mit den rechtsseitigen außermittigen Anspritzpunkten vorgegeben, wobei diese rechtsseitigen außermittigen Anspritzpunkte dann auch in der Reihe mit dem mittigen Anspritzpunkt 16 sind. Entsprechend ist der mittige Anspritzpunkt 16 in einer Reihe mit den linksseitig außermittigen Anspritzpunkten vorgegeben.

Auch hier wird das Herstellen dahingehend durchgeführt, dass zunächst über die mittigen Anspritzpunkte 14 bis 16 das Einspritzen der Schmelze beginnt. Auch dann wird wiederum insbesondere abhängig von den bereits oben genannten Einflussfaktoren ein Beginnen eines Einspritzens zu einem zum Zeitpunkt in einen außermittig vorgegebenen Anspritzpunkt und/oder ein Beenden des Einspritzens zu einem Zeitpunkt in einen außermittig vorgegebenen Anspritzpunkt vollzogen. Insbesondere wird dazu auch die Temperatur und/oder der Innendruck im Spritzgusswerkzeug berücksichtigt.

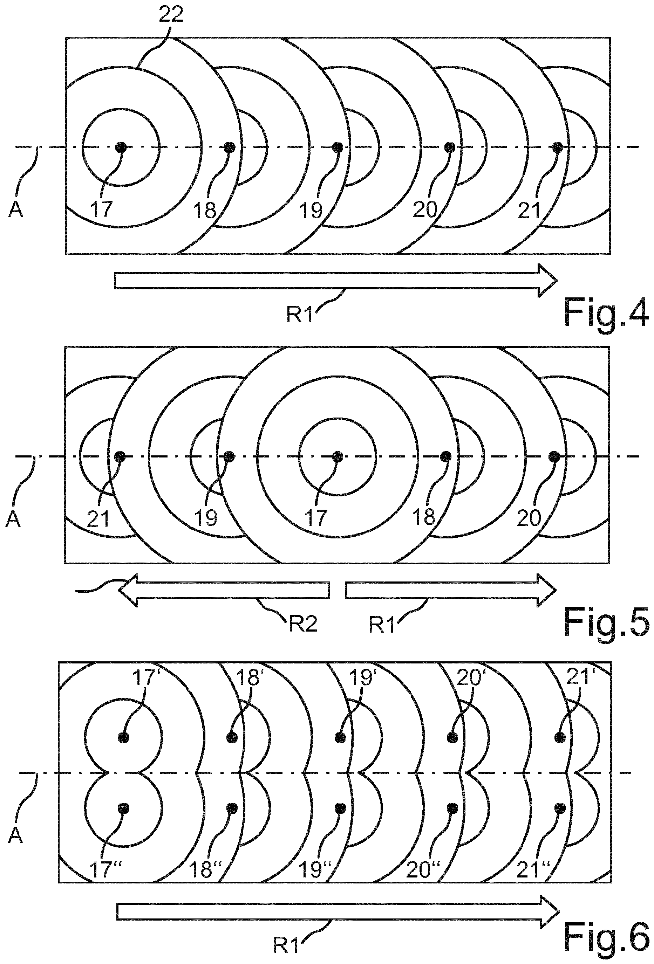

In Fig. 4 ist in einer vereinfachten Darstellung eine Ausführung gezeigt, bei welcher entlang einer Längsachse A nur in einer Reihe mehrere Anspritzpunkte 17, 18, 19, 20 und 21 vorgegeben werden. Das Einspritzen der Schmelze erfolgt dabei lediglich in eine Richtung R1, wie sie durch den Pfeil angegeben ist. Das Einspritzen wird zunächst bei dem Anspritzpunkt 17 begonnen, wobei dazu dann in den weiteren Anspritzpunkten 18 bis 21 noch kein Einspritzen der Schmelze erfolgt. Zeitversetzt zu dem Einspritzen in dem Anspritzpunkt 17 wird abhängig von einem Ausbreiten einer Fließfront 22 der Schmelze in dem Spritzgusswerkzeug dann das Einspritzen der Schmelze in den Anspritzpunkt 18 begonnen. Entsprechendes erfolgt dann im weiteren Verlauf mit den dann jeweils weiteren Fließfronten, wie sie in Fig. 4 gezeichnet sind, jedoch nicht weiter mit Bezugszeichen versehen sind. So ist es auch ermöglicht, dass das Abkühlen der Schmelze, die über den ersten Anspritzpunkt 17 eingebracht wurde, bereits ausreichend erfolgt ist, obwohl beispielsweise beim zumindest letzten Anspritzpunkt 21 in der Einspritzreihe primär noch keine Schmelze eingebracht wurde. Es kann dann auch vorgesehen sein, dass bereits vor dem Abschließen der primären Einbringung der Schmelze an allen Anspritzpunkten bereits mit dem Nachfüllen am insbesondere ersten Anspritzpunkt 17 begonnen wird beziehungsweise dies zeitgleich durchgeführt wird.

Entsprechendes kann auch dann bereits zusätzlich oder anstatt dazu an anderen Anspritzpunkten, beispielsweise am Anspritzpunkt 18 vollzogen werden.

Bei der Darstellung in Fig. 5 ist im Unterschied zur Ausführung gemäß Fig. 4 vorgesehen, dass nach dem Beginnen des Einspritzens der Schmelze über einen mittigen Anspritzpunkt 17 im Weiteren dann jeweils gleichzeitig in zwei verschiedene Richtungen R1 und R2 das Einspritzen in nachfolgende außermittige Anspritzpunkte erfolgt. So wird vorgesehen, dass nach dem Einspritzen oder zumindest zeitversetzt zu dem Einspritzen in den mittigen Anspritzpunkt 17 dann auch die Schmelze gleichzeitig in den außermittigen nachfolgenden Anspritzpunkten 18 und 19 begonnen wird und wiederum zeitversetzt nachfolgend, insbesondere abhängig von der Geschwindigkeit der Fließfronten, dazu dann das gleichzeitige Einspritzen in der Reihe dann weiter nach außen hin zu folgenden außermittigen Anspritzpunkten 20 und 21 durchgeführt wird.

Bei einem weiteren Ausführungsbeispiel gemäß Fig. 6 ist wiederum ein Einspritzszenario lediglich in eine Richtung R1 gezeigt. Im Unterschied zur Darstellung gemäß Fig. 4 werden hier Ausführungen entsprechend zu Fig. 2 gezeigt, bei welchem Anspritzpunkt-Paare vorgesehen sind, die an gegenüberliegenden Seiten zur Längsachse A vorgegeben werden, symmetrisch zur Längsachse A angeordnet beziehungsweise vorgegeben werden. Es wird hier vorgesehen, dass über Anspritzpunkte 17' und 17" das Einspritzen insbesondere gleichzeitig begonnen wird und wiederum abhängig von dem Ausbreiten der Fließfronten dann nachfolgend und zeitversetzt das insbesondere gleichzeitige Einspritzen in die Anspritzpunkte 18' und 18" erfolgt. Auch dann wiederum zeitversetzt wird das weitere Einspritzen in die dann wiederum in der Reihe nachfolgenden weiteren Anspritzpunkte 19' und 19", sowie wiederum zeitversetzt in die Anspritzpunkte 20' und 20" sowie wiederum zeitversetzt in die weiteren Anspritzpunkte 21' und 21" durchgeführt. Hier darf im Hinblick auf vorzugsweise Festlegung von Zeitpunkten des Beginn sowie des Endes des Einspritzens in die außermittigen Anspritzpunkte auf oben genannten Abhängigkeiten von Einflussfaktoren verwiesen werden. Auch hier kann dann wiederum insbesondere auch die Temperatur des Spritzgusswerkzeugs an spezifischen Stellen und/oder ein Innendruck in dem Spritzgusswerkzeug berücksichtigt werden. In dem Zusammenhang kann dann wiederum auf die jeweils örtlich spezifische Lage einer Fließfront geschlossen werden und dem dann daraus resultierenden Erfordernis einer Primäreinspritzung einer Schmelze in einem weiteren nachfolgenden Anspritzpunkt geschlossen werden und/oder auf das Nachfüllen von Schmelze in einem bereits vorhergehenden Anspritzpunkt, über den das primäre Einspritzen der Schmelze bereits erfolgt ist und ein Abkühlen in dem Bereich der Schmelze bereits ausreichend vorliegt.

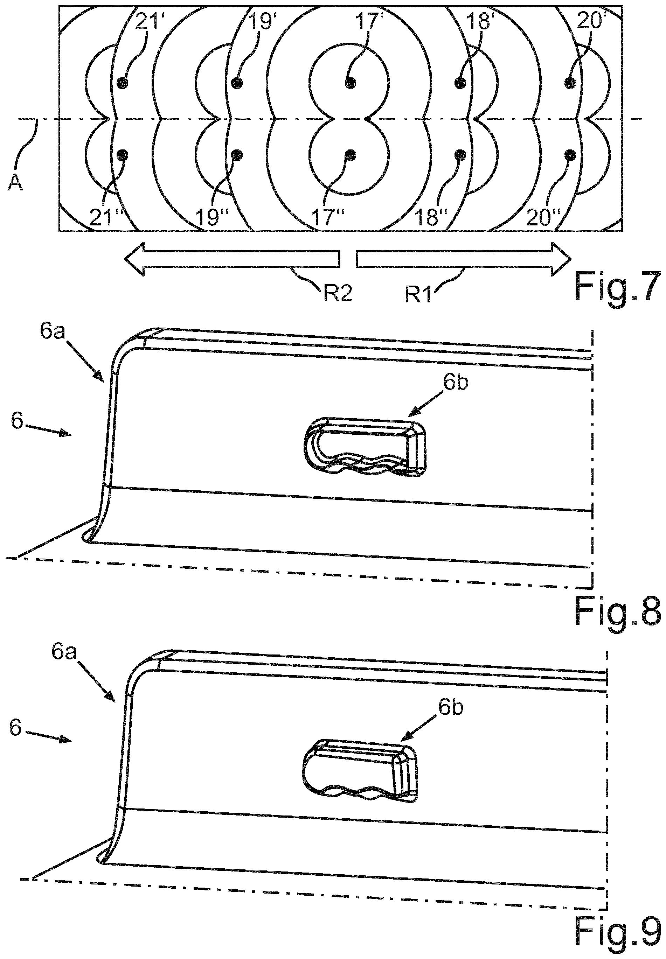

In Fig. 7 ist ein weiteres Beispiel gezeigt, bei welchem im Unterschied zu Fig. 5 auch hier wiederum nicht nur eine Reihe parallel zur Längsachse A von Anspritzpunkten vorgesehen ist, sondern entsprechend der Ausführung in Fig. 6 jeweils Anspritzpunkt-Paare vorliegen. Das Einspritzen erfolgt dann wiederum hier ausgehend von dem Beginn der Einspritzung über die zentralen Anspritzpunkte 17' und 17" in beide Richtungen R1 und R2 an nachfolgenden außermittigen Anspritzpunkten insbesondere gleichzeitig.

In Fig. 8 ist ein Ausschnitt der Innenverkleidung 6 gezeigt. Dort ist an einem Steg 6a eine erhaben nach außen stehende Nocke 6b integriert, die lediglich als Umrandung beziehungsweise Rand beziehungsweise Konturensteg ausgebildet ist. Eine derartige Ausgestaltung ist ein entsprechender konstruktiver Freiheitsgrad, der sich durch die Erfindung beziehungsweise eine vorteilhafte Ausgestaltung beim Herstellen mit diesem spezifischen Kombinieren von Spritzgießabläufen ergibt.

Im Unterschied dazu ist in Fig. 9 eine Ausgestaltung eines Innenverkleidungsteils gezeigt, bei welchem eine derartige Nocke 6b nur als erhabener Höcker und nicht in dieser Filigranheit, wie sie in Fig. 8 gebildet ist, erzeugt ist. Grundsätzlich ist es daher auch möglich, dass die Nocke 6b gemäß Fig. 9 natürlich auch durch die Erfindung oder eine vorteilhafte Ausgestaltung davon geometrisch entsprechend hergestellt werden kann. Durch die Variantenmöglichkeiten, wie sie in Fig. 8 und Fig. 9 an Beispielen von Geometrien dargestellt sind, ist eine weitere Vorteilhaftigkeit der Erfindung auch nochmals bekräftigt.

### Bezugszeichenliste

- 1: Haushaltsgerät
- 2: Gehäuse
- 2a: Innenbehälter
- 3: Aufnahmeraum
- 4: Tür
- 5: Außentür
- 6: Innenverkleidung
- 6a: Steg
- 6b: Nocke
- 7: Wannenboden
- 8: Anspritzpunkt
- 9: Anspritzpunkt
- 10: Anspritzpunkt
- 11: Anspritzpunkt
- 12: Anspritzpunkt
- 13: Anspritzpunkt
- 14: mittiger Anspritzpunkt
- 15: mittiger Anspritzpunkt
- 16: mittiger Anspritzpunkt
- 17, 17', 17": Anspritzpunkt
- 18, 18', 18": Anspritzpunkt
- 19, 19', 19": Anspritzpunkt
- 20, 20', 20": Anspritzpunkt
- 21, 21', 21": Anspritzpunkt
- 22: Fließfront
- A: Längsachse
- R1: Richtung
- R2: Richtung

## Patentansprüche

1. Verfahren zum Herstellen eines Haushaltsgerätebauteils (6) für ein Haushaltsgerät (1), bei welchem das Haushaltsgerätebauteil (6) aus Kunststoff hergestellt wird, wobei das Haushaltsgerätebauteil (6) durch Spritzgießen hergestellt wird und beim Spritzgießen zumindest phasenweise in Kombination ein Dünnwandspritzgießen und ein Kaskaden-Spritzgießen durchgeführt wird, wobei
das Dünnwandspritzgießen mit einem Wandicken-Fließweg-Verhältnis zwischen größer 1:200 und 1:300 durchgeführt wird und das Haushaltskältegerätebauteil (6) durch die Kombination des Dünnwandspritzgießens und des Kaskaden-Spritzgießens mit einer Wanddicke kleiner 1,5 mm hergestellt wird.

2. Verfahren nach einem der vorhergehenden Ansprüche, **dadurch gekennzeichnet, dass** für das Kaskaden-Spritzgießen in Richtung der Längsachse (A) des herzustellenden Haushaltsgerätebauteils (6) betrachtet von der Mehrzahl von Anspritzpunkten (8 bis 13; 14 bis 16; 17, 17', 17", 18, 18', 18", 19, 19', 19", 20, 20', 20", 21, 21', 21") zumindest ein Anspritzpunkt (10, 11; 14 bis 16; 17, 17', 17") mittig vorgegeben wird, über welchen ein Einspritzen einer Schmelze des Kunststoffmaterials in ein Spritzgusswerkzeug zumindest zeitweise vor dem Einspritzen der Schmelze in zumindest einen anderen, entlang der Längsachse (A) betrachtet außermittig vorgegebenen Anspritzpunkt (8, 9, 11, 12; 18 bis 20; 18', 18", 10', 19", 20', 20", 21', 21") beginnt.

3. Verfahren nach Anspruch 2, **dadurch gekennzeichnet, dass** ein Zeitpunkt des Beginns eines Einspritzens in einen außermittig vorgegebenen Anspritzpunkt (8, 9, 11, 12; 18 bis 20; 18', 18", 10', 19", 20', 20", 21', 21") abhängig von der Art der einzuspritzenden Schmelze und/oder abhängig von der Art der in den zumindest einen mittigen Anspritzpunkt (10, 11; 14 bis 16; 17, 17', 17") eingespritzten Schmelze und/oder einem entlang der Längsachse (A) bemessenen Abstand zwischen dem zumindest einen mittigen Anspritzpunkt (10, 11; 14 bis 16; 17, 17', 17") und dem außermittigen Anspritzpunkt (8, 9, 11, 12; 18 bis 20; 18', 18", 10', 19", 20', 20", 21', 21") und/oder dem Durchmesser des zumindest einen mittigen Anspritzpunkts (10, 11; 14 bis 16; 17, 17', 17") und/oder dem Durchmesser des außermittigen Anspritzpunkts (8, 9, 11, 12; 18 bis 20; 18', 18", 10', 19", 20', 20", 21', 21") und/oder von der Anzahl von außermittigen Anspritzpunkten (8, 9, 11, 12; 18 bis 20; 18', 18", 10', 19", 20', 20", 21', 21"), die auf gleicher Längslage entlang der Längsachse (A) zu diesem außermittigen Anspritzpunkt (8, 9, 11, 12; 18 bis 20; 18', 18", 10', 19", 20', 20", 21', 21") und/oder den Einspritzdruck der Schmelze in den zumindest einen ersten mittigen Anspritzpunkt (10, 11; 14 bis 16; 17, 17', 17") und/oder in den vorgesehenen Einspritzdruck in den außermittigen Anspritzpunkt (8, 9, 11, 12; 18 bis 20; 18', 18", 10', 19", 20', 20", 21', 21") und/oder der Menge der in den zumindest einen mittigen Anspritzpunkt (10, 11; 14 bis 16; 17, 17', 17") eingespritzten Schmelze und/oder der vorgesehenen Menge der in den außermittigen Anspritzpunkt (8, 9, 11, 12; 18 bis 20; 18', 18", 10', 19", 20', 20", 21', 21") einzuspritzenden Schmelze und/oder einer Zeitdauer eines Einspritzens einer Schmelze über den mittigen Anspritzpunkt (10, 11; 14 bis 16; 17, 17', 17") vorgegeben wird.

4. Verfahren nach Anspruch 2 oder 3, **dadurch gekennzeichnet, dass** ein Zeitpunkt des Endes eines Einspritzens in einen außermittig vorgegebenen Anspritzpunkt (8, 9, 11, 12; 18 bis 20; 18', 18", 10', 19", 20', 20", 21', 21") abhängig von der Art der einzuspritzenden Schmelze und/oder abhängig von der Art der in den zumindest einen mittigen Anspritzpunkt (10, 11; 14 bis 16; 17, 17', 17") eingespritzten Schmelze und/oder einem entlang der Längsachse (A) bemessenen Abstand zwischen dem zumindest einen mittigen Anspritzpunkt (10, 11; 14 bis 16; 17, 17', 17") und dem außermittigen Anspritzpunkt (8, 9, 11, 12; 18 bis 20; 18', 18", 10', 19", 20', 20", 21', 21") und/oder dem Durchmesser des zumindest einen mittigen Anspritzpunkts (10, 11; 14 bis 16; 17, 17', 17") und/oder dem Durchmesser des außermittigen Anspritzpunkts (8, 9, 11, 12; 18 bis 20; 18', 18", 10', 19", 20', 20", 21', 21") und/oder von der Anzahl von außermittigen Anspritzpunkten(8, 9, 11, 12; 18 bis 20; 18', 18", 10', 19", 20', 20", 21', 21"), die auf gleicher Längslage entlang der Längsachse (A) zu diesem außermittigen Anspritzpunkt (8, 9, 11, 12; 18 bis 20; 18', 18", 10', 19", 20', 20", 21', 21") und/oder den Einspritzdruck der Schmelze in den zumindest einen ersten mittigen Anspritzpunkt (10, 11; 14 bis 16; 17, 17', 17") und/oder in den vorgesehenen Einspritzdruck in den außermittigen Anspritzpunkt (8, 9, 11, 12; 18 bis 20; 18', 18", 10', 19", 20', 20", 21', 21") und/oder der Menge der in den zumindest einen mittigen Anspritzpunkt (10, 11; 14 bis 16; 17, 17', 17") eingespritzten Schmelze und/oder der vorgesehenen Menge der in den außermittigen Anspritzpunkt (8, 9, 11, 12; 18 bis 20; 18', 18", 10', 19", 20', 20", 21', 21") einzuspritzenden Schmelze und/oder einer Zeitdauer eines Einspritzens einer Schmelze über den mittigen Anspritzpunkt (10, 11; 14 bis 16; 17, 17', 17") vorgegeben wird.

5. Verfahren nach einem der vorhergehenden Ansprüche 2 bis 4, **dadurch gekennzeichnet, dass** zu zumindest dem einen mittigen Anspritzpunkt (10, 11; 14 bis 16; 17, 17', 17") in eine erste Richtung (R1) entlang der Längsachse (A) zumindest ein erster außermittiger Anspritzpunkt (8, 9, 11, 12; 18 bis 20; 18', 18", 10', 19", 20', 20", 21', 21") vorgegeben wird und ausgehend von dem zumindest einen mittigen Anspritzpunkt (10, 11; 14 bis 16; 17, 17', 17") in eine zur ersten Richtung entgegen gesetzte zweite Richtung (R2) entlang der Längsachse (A) zumindest ein zweite außermittiger Anspritzpunkt (8, 9, 11, 12; 18 bis 20; 18', 18", 10', 19", 20', 20", 21', 21") vorgegeben wird und auf das Einspritzen der Schmelze in den zumindest einen mittigen Anspritzpunkt (10, 11; 14 bis 16; 17, 17', 17") das Einspritzen einer Schmelze in den zumindest einen ersten und den zumindest einen zweiten außermittigen Anspritzpunkt (8, 9, 11, 12; 18 bis 20; 18', 18", 10', 19", 20', 20", 21', 21") zumindest zeitweise, insbesondere vollständig, gleichzeitig durchgeführt wird.

6. Verfahren nach einem der vorhergehenden Ansprüche, **dadurch gekennzeichnet, dass** für das Kaskaden-Spritzgießen in Richtung der Längsachse (A) des herzustellenden Haushaltsgerätebauteils (6) betrachtet von der Mehrzahl von Anspritzpunkten (8 bis 17, 17', 17",18', 18", 10', 19", 20', 20", 21', 21") zumindest zwei Anspritzpunkte (8 bis 17, 17', 17",18', 18", 10', 19", 20', 20", 21', 21") auf gleicher Längslage und an gegenüberliegenden Seiten der Längsachse (A) vorgegeben werden, über welche gleichzeitig eine Schmelze des Kunststoffmaterials in ein Spritzgusswerkzeug eingespritzt wird.

7. Verfahren nach einem der vorhergehenden Ansprüche, **dadurch gekennzeichnet, dass** das Haushaltskältegerätebauteil (6) durch die Kombination des Dünnwandspritzgießens und des Kaskaden-Spritzgießens mit einer Wanddicke zwischen 0,6 mm und 1 mm hergestellt wird.

8. Verfahren nach einem der vorhergehenden Ansprüche, **dadurch gekennzeichnet, dass** für das Kaskaden-Spritzgießen zumindest vier Anspritzpunkte (8 bis 17, 17', 17",18', 18", 10', 19", 20', 20", 21', 21") vorgegeben werden.

9. Verfahren nach einem der vorhergehenden Ansprüche, **dadurch gekennzeichnet, dass** als Haushaltsgerätebauteil ein wannenförmiges Haushaltsgerätebauteil (6) hergestellt wird.

10. Verfahren nach Anspruch 9, **dadurch gekennzeichnet, dass** ein Wannenboden (7) des herzustellenden wannenförmigen Haushaltsgerätebauteils (6) mit einem viereckigen Flächenbereich mit einer ersten Seitenlänge, insbesondere einer Breite, von zumindest 30 cm und/oder einer zweiten Seitenlänge, insbesondere einer Höhe, von zumindest 25 cm hergestellt wird.

11. Verfahren nach Anspruch 9 oder 10, **dadurch gekennzeichnet, dass** die Anzahl und/oder Lage von Anspritzpunkte (8 bis 17, 17', 17",18', 18", 10', 19", 20', 20", 21', 21") für das Kaskaden-Spritzgießen abhängig von der Größe des wannenförmigen Haushaltsgerätebauteils (6), insbesondere abhängig von der Größe des Flächenbereichs eines Wannenbodens (7) des Haushaltsgerätebauteils (6), vorgegeben werden.

12. Verfahren nach Anspruch 11, **dadurch gekennzeichnet, dass** die Anzahl der Anspritzpunkte (8 bis 17, 17', 17",18', 18", 10', 19", 20', 20", 21', 21") entlang einer Längsachse (A) des herzustellenden Haushaltskältegerätebauteils (6) und/oder die Lage der Anspritzpunkte (8 bis 17, 17', 17",18', 18", 10', 19", 20', 20", 21', 21") entlang einer Längsachse (A) des herzustellenden Haushaltskältegerätebauteils (6) abhängig von der Größe des wannenförmigen Haushaltsgerätebauteils (6), insbesondere abhängig von der Größe des Flächenbereichs eines Wannenbodens (7) des Haushaltsgerätebauteils (6) vorgegeben werden.

13. Verfahren nach Anspruch 11 oder 12, **dadurch gekennzeichnet, dass** die Anzahl der Anspritzpunkte (8 bis 17, 17', 17",18', 18", 10', 19", 20', 20", 21', 21") paarweise und an gegenüberliegenden Seite zu einer Längsachse (A) des wannenförmigen Haushaltsgerätebauteils (6) vorgegeben wird und die Anzahl der Anspritzpunkt-Paare abhängig von der Größe des wannenförmigen Haushaltsgerätebauteils (6), insbesondere abhängig von der Größe des Flächenbereichs eines Wannenbodens (7) des Haushaltsgerätebauteils (6) vorgegeben werden.

14. Verfahren nach einem der vorhergehenden Ansprüche, **dadurch gekennzeichnet, dass** eine Zuhaltekraft zum Zuhalten eines Spritzgusswerkzeugs beim Spritzgießen des Haushaltsgerätebauteils (6) auf einen Wert kleiner oder gleich einem Gewicht von 1700 Tonnen entsprechend begrenzt wird.

15. Verfahren nach einem der vorhergehenden Ansprüche, **dadurch gekennzeichnet, dass** als Haushaltsgerätebauteil eine Innenverkleidung (6) einer Tür (4) für ein Haushaltskältegerät hergestellt wird.

16. Haushaltsgerätebauteil (6), welches nach einem Verfahren gemäß den vorhergehenden Ansprüchen hergestellt ist.

## Claims

1. Method for manufacturing a household appliance component (6) for a household appliance (1), in which the household appliance component (6) is made from plastic, wherein the household appliance component (6) is manufactured by injection-moulding and in an injection-moulding process a thin-wall injection-moulding combined with a cascade moulding is carried out at least in some phases, wherein the thin-wall injection-moulding is carried out at a wall thickness-flow path ratio of between greater than 1:200 and 1:300 and the household refrigeration appliance component (6) is manufactured by combining the thin-wall injection-moulding and the cascade moulding with a wall thickness of less than 1.5 mm.

2. Method according to one of the preceding claims, **characterised in that** viewed in the direction of the longitudinal axis (A) of the household appliance component (6) to be manufactured, for the cascade moulding, at least one injection point (10, 11; 14 to 16; 17, 17', 17") is centrally predetermined from the plurality of injection points (8 to 13; 14 to 16; 17, 17', 17", 18, 18', 18", 19, 19', 19", 20, 20', 20", 21, 21', 21"), via which an injection of a melt of the plastics material into an injection mould is initiated at least partially before the injection of the melt in at least one further injection point (8, 9, 11, 12; 18 to 20; 18', 18", 10', 19", 20', 20", 21', 21") which is predetermined eccentrically when viewed along the longitudinal axis (A).

3. Method according to claim 2, **characterised in that** a time for the start of an injection in an eccentrically predetermined injection point (8, 9, 11, 12; 18 to 20; 18', 18", 10', 19", 20', 20", 21', 21") is predetermined according to the type of melt to be injected and/or according to the type of melt injected in the at least one central injection point (10, 11; 14 to 16; 17, 17', 17") and/or a spacing measured along the longitudinal axis (A) between the at least one central injection point (10, 11; 14 to 16; 17, 17', 17") and the eccentric injection point (8, 9, 11, 12; 18 to 20; 18', 18", 10', 19", 20', 20", 21', 21") and/or the diameter of the at least one central injection point (10, 11; 14 to 16; 17, 17', 17") and/or the diameter of the eccentric injection point (8, 9, 11, 12; 18 to 20; 18', 18", 10', 19", 20', 20", 21', 21") and/or to the number of eccentric injection points (8, 9, 11, 12; 18 to 20; 18', 18", 10', 19", 20', 20", 21', 21") at the same longitudinal position along the longitudinal axis (A) relative to this eccentric injection point (8, 9, 11, 12; 18 to 20; 18', 18", 10', 19", 20', 20", 21', 21") and/or the injection pressure of the melt in the at least one first central injection point (10, 11; 14 to 16; 17, 17', 17") and/or the injection pressure provided in the eccentric injection point (8, 9, 11, 12; 18 to 20; 18', 18", 10', 19", 20', 20", 21', 21") and/or the quantity of the melt injected in the at least one central injection point (10, 11; 14 to 16; 17, 17', 17") and/or the quantity of the melt provided to be injected in the eccentric injection point (8, 9, 11, 12; 18 to 20; 18', 18", 10', 19", 20', 20", 21', 21") and/or a time period of an injection of a melt via the central injection point (10, 11; 14 to 16; 17, 17', 17").

4. Method according to claim 2 or 3, **characterised in that** a time for the end of an injection in an eccentrically predetermined injection point (8, 9, 11, 12; 18 to 20; 18', 18", 10', 19", 20', 20", 21', 21") is predetermined according to the type of melt to be injected and/or according to the type of melt injected in the at least one central injection point (10, 11; 14 to 16; 17, 17', 17") and/or a spacing measured along the longitudinal axis (A) between the at least one central injection point (10, 11; 14 to 16; 17, 17', 17") and the eccentric injection point (8, 9, 11, 12; 18 to 20; 18', 18", 10', 19", 20', 20", 21', 21") and/or the diameter of the at least one central injection point (10, 11; 14 to 16; 17, 17', 17") and/or the diameter of the eccentric injection point (8, 9, 11, 12; 18 to 20; 18', 18", 10', 19", 20', 20", 21', 21") and/or to the number of eccentric injection points (8, 9, 11, 12; 18 to 20; 18', 18", 10', 19", 20', 20", 21', 21") at the same longitudinal position along the longitudinal axis (A) relative to this eccentric injection point (8, 9, 11, 12; 18 to 20; 18', 18", 10', 19", 20', 20", 21', 21") and/or the injection pressure of the melt in the at least one first central injection point (10, 11; 14 to 16; 17, 17', 17") and/or in the injection pressure provided in the eccentric injection point (8, 9, 11, 12; 18 to 20; 18', 18", 10', 19", 20', 20", 21', 21") and/or the quantity of the melt injected into the at least one central injection point (10, 11; 14 to 16; 17, 17', 17") and/or the quantity of the melt provided to be injected in the eccentric injection point (8, 9, 11, 12; 18 to 20, 18', 18", 10', 19", 20', 20", 21', 21") and/or a time period of an injection of a melt via the central injection point (10, 11; 14 to 16; 17, 17', 17").

5. Method according to one of the preceding claims 2 to 4, **characterised in that** at least one first eccentric injection point (8, 9, 11, 12; 18 to 20; 18', 18", 10', 19", 20', 20", 21', 21") is predetermined in at least the one central injection point (10, 11; 14 to 16; 17, 17', 17") in a first direction (R1) along the longitudinal axis (A) and, starting from the at least one central injection point (10, 11; 14 to 16; 17, 17', 17"), at least one second eccentric injection point (8, 9, 11, 12; 18 to 20; 18', 18", 10', 19", 20', 20", 21', 21") is predetermined in a second direction (R2) opposing the first direction along the longitudinal axis (A), and with the injection of the melt in the at least one central injection point (10, 11; 14 to 16; 17, 17', 17"), the injection of a melt is carried out in the at least one first and the at least one second eccentric injection point (8, 9, 11, 12; 18 to 20; 18', 18", 10', 19", 20', 20", 21', 21") at least partially, in particular entirely, simultaneously.

6. Method according to one of the preceding claims, **characterised in that** for the cascade moulding, viewed in the direction of the longitudinal axis (A) of the household appliance component (6) to be manufactured, at least two injection points (8 to 17, 17', 17", 18', 18", 10', 19", 20', 20", 21', 21") on the same longitudinal position and on opposing sides of the longitudinal axis (A), are predetermined from the plurality of injection points (8 to 17, 17', 17", 18', 18", 10', 19", 20', 20", 21', 21"), via which a melt of the plastics material is injected simultaneously into an injection mould.

7. Method according to one of the preceding claims, **characterised in that** by the combination of the thin-wall injection-moulding and the cascade moulding, the household appliance component (6) is manufactured with a wall thickness of between 0.6 mm and 1 mm.

8. Method according to one of the preceding claims, **characterised in that** at least four injection points (8 to 17, 17', 17", 18', 18", 10', 19", 20', 20", 21', 21") are predetermined for the cascade moulding.

9. Method according to one of the preceding claims, **characterised in that** a trough-shaped household appliance component (6) is manufactured as the household appliance component.

10. Method according to claim 9, **characterised in that** a trough base (7) of the trough-shaped household appliance component (6) to be manufactured, is manufactured with a quadrangular surface area having a first side length, in particular a width, of at least 30 cm and/or a second side length, in particular a height, of at least 25 cm.

11. Method according to claim 9 or 10, **characterised in that** the number and/or position of injection points (8 to 17, 17', 17", 18', 18", 10', 19", 20', 20", 21', 21") for the cascade moulding are predetermined according to the size of the trough-shaped household appliance component (6), in particular according to the size of the surface area of a trough base (7) of the household appliance component (6).

12. Method according to claim 11, **characterised in that** the number of injection points (8 to 17, 17', 17", 18', 18", 10', 19", 20', 20", 21', 21") along a longitudinal axis (A) of the household refrigeration appliance component (6) to be manufactured and/or the position of the injection points (8 to 17, 17', 17", 18', 18", 10', 19", 20', 20", 21', 21") along a longitudinal axis (A) of the household refrigeration appliance component (6) to be manufactured, are predetermined according to the size of the trough-shaped household appliance component (6), in particular according to the size of the surface area of a trough base (7) of the household appliance component (6).

13. Method according to claim 11 or 12, **characterised in that** the number of injection points (8 to 17, 17', 17", 18', 18", 10', 19", 20', 20", 21', 21") is predetermined in pairs and on opposing sides of a longitudinal axis (A) of the trough-shaped household appliance component (6), and the number of injection point pairs is predetermined according to the size of the trough-shaped household appliance component (6), in particular according to the size of the surface area of a trough base (7) of the household appliance component (6).

14. Method according to one of the preceding claims, **characterised in that** a locking force for locking an injection mould when injection-moulding the household appliance component (6) is correspondingly limited to a value of less than or equal to a weight of 1700 tons.

15. Method according to one of the preceding claims, **characterised in that** an internal cladding (6) of a door (4) for a household refrigeration appliance is manufactured as a household appliance component.

16. Household appliance component (6) which is manufactured according to a method according to the preceding claims.

## Revendications

1. Procédé de fabrication d'un élément d'appareil électroménager (6) pour un appareil électroménager (1), dans lequel l'élément d'appareil électroménager (6) est fabriqué en une matière plastique, l'élément d'appareil électroménager (6) étant fabriqué par moulage par injection et le moulage par injection étant exécuté en associant au moins par phases un moulage par injection de parois minces et un moulage par injection en cascade,
dans lequel le moulage par injection de parois minces est exécuté avec un rapport épaisseur de paroi / longueur de trajet d'écoulement compris entre plus de 1/200 et 1/300 et l'élément d'appareil électroménager (6) est fabriqué avec une épaisseur de paroi inférieure à 1,5 mm en associant le moulage par injection de parois minces et le moulage par injection en cascade.

2. Procédé selon la revendication précédente, **caractérisé en ce que**, concernant le moulage par injection en cascade, vu dans la direction de l'axe longitudinal (A) de l'élément d'appareil électroménager (6), au moins un point d'injection central (10, 11, 14 à 16, 17, 17', 17") parmi la pluralité des points d'injection (8 à 13, 14 à 16, 17, 17', 17", 18, 18', 18", 19, 19', 19", 20, 20', 20", 21, 21', 21") est défini, par lequel une injection d'une masse fondue de la matière plastique dans un outil de moulage par injection débute au moins ponctuellement avant l'injection de la masse fondue dans au moins un autre point d'injection (8, 9, 11, 12, 18 à 20, 18', 18", 10', 19", 20', 20", 21', 21") excentré défini, vu le long de l'axe longitudinal (A).

3. Procédé selon la revendication 2, **caractérisé en ce qu'**un moment de début d'une injection dans un point d'injection excentré défini (8, 9, 11, 12, 18 à 20, 18', 18", 10', 19", 20', 20", 21', 21") est défini en fonction du type de la masse fondue à injecter et/ou en fonction du type de la masse fondue injectée dans l'au moins un point d'injection central (10, 11, 14 à 16, 17, 17', 17") et/ou d'une distance mesurée le long de l'axe longitudinal (A) entre l'au moins un point d'injection central (10, 11, 14 à 16, 17, 17', 17") et le point d'injection excentré (8, 9, 11, 12, 18 à 20, 18', 18", 10', 19", 20', 20", 21', 21") et/ou du diamètre de l'au moins un point d'injection central (10, 11, 14 à 16, 17, 17', 17") et/ou du diamètre du point d'injection excentré (8, 9, 11, 12, 18 à 20, 18', 18", 10', 19", 20', 20", 21', 21") et/ou du nombre de points d'injection excentrés (8, 9, 11, 12, 18 à 20, 18', 18", 10', 19", 20', 20", 21', 21") qui sont situés à la même position en longueur le long de l'axe longitudinal (A) par rapport à ce point d'injection excentré (8, 9, 11, 12, 18 à 20, 18', 18", 10', 19", 20', 20", 21', 21") et/ou de la pression d'injection de la masse fondue dans l'au moins un point d'injection central (10, 11, 14 à 16, 17, 17', 17") et/ou de la pression d'injection prévue dans le point d'injection excentré (8, 9, 11, 12, 18 à 20, 18', 18", 10', 19", 20', 20", 21', 21") et/ou de la quantité de la masse fondue injectée dans l'au moins un point d'injection central (10, 11, 14 à 16, 17, 17', 17") et/ou de la quantité prévue de masse fondue à injecter dans le point d'injection excentré (8, 9, 11, 12, 18 à 20, 18', 18", 10', 19", 20', 20", 21', 21") et/ou d'une durée d'une injection d'une masse fondue par le point d'injection central (10, 11, 14 à 16, 17, 17', 17").

4. Procédé selon la revendication 2 ou 3, **caractérisé en ce qu'**un moment de fin d'une injection dans un point d'injection excentré défini (8, 9, 11, 12, 18 à 20, 18', 18", 10', 19", 20', 20", 21', 21") est défini en fonction du type de la masse fondue à injecter et/ou en fonction du type de la masse fondue injectée dans l'au moins un point d'injection central (10, 11, 14 à 16, 17, 17', 17") et/ou d'une distance mesurée le long de l'axe longitudinal (A) entre l'au moins un point d'injection central (10, 11, 14 à 16, 17, 17', 17") et le point d'injection excentré (8, 9, 11, 12, 18 à 20, 18', 18", 10', 19", 20', 20", 21', 21") et/ou du diamètre de l'au moins un point d'injection central (10, 11, 14 à 16, 17, 17', 17") et/ou du diamètre du point d'injection excentré (8, 9, 11, 12, 18 à 20, 18', 18", 10', 19", 20', 20", 21', 21") et/ou du nombre de points d'injection excentrés (8, 9, 11, 12, 18 à 20, 18', 18", 10', 19", 20', 20", 21', 21") qui sont situés à la même position en longueur le long de l'axe longitudinal (A) par rapport à ce point d'injection excentré (8, 9, 11, 12, 18 à 20, 18', 18", 10', 19", 20', 20", 21', 21") et/ou de la pression d'injection de la masse fondue dans l'au moins un point d'injection central (10, 11, 14 à 16, 17, 17', 17") et/ou de la pression d'injection prévue dans le point d'injection excentré (8, 9, 11, 12, 18 à 20, 18', 18", 10', 19", 20', 20", 21', 21") et/ou de la quantité de la masse fondue injectée dans l'au moins un point d'injection central (10, 11, 14 à 16, 17, 17', 17") et/ou de la quantité prévue de masse fondue à injecter dans le point d'injection excentré (8, 9, 11, 12, 18 à 20, 18', 18", 10', 19", 20', 20", 21', 21") et/ou d'une durée d'une injection d'une masse fondue par le point d'injection central (10, 11, 14 à 16, 17, 17', 17").

5. Procédé selon l'une des revendications 2 à 4, **caractérisé en ce qu'**au moins un premier point d'injection excentré (8, 9, 11, 12, 18 à 20, 18', 18", 10', 19", 20', 20", 21', 21") dans une première direction (R1) suivant l'axe longitudinal (A) par rapport à l'au moins un point d'injection central (10, 11, 14 à 16, 17, 17', 17") est défini et, à partir de l'au moins un point d'injection central (10, 11, 14 à 16, 17, 17', 17"), un deuxième point d'injection excentré (8, 9, 11, 12, 18 à 20, 18', 18", 10', 19", 20', 20", 21', 21") dans une deuxième direction (R2) suivant l'axe longitudinal (A) opposée à la première direction est défini et, après l'injection de la masse fondue dans l'au moins un point d'injection central (10, 11, 14 à 16, 17, 17', 17"), l'injection d'une masse fondue dans l'au moins un premier et l'au moins un deuxième points d'injection excentrés (8, 9, 11, 12, 18 à 20, 18', 18", 10', 19", 20', 20", 21', 21") est exécutée simultanément au moins ponctuellement, en particulier intégralement.

6. Procédé selon l'une des revendications précédentes, **caractérisé en ce que**, concernant le moulage par injection en cascade, vu en direction de l'axe longitudinal (A) de l'élément d'appareil électroménager (6) à fabriquer, au moins deux points d'injection (8 à 17, 17', 17", 18', 18", 10', 19", 20', 20", 21', 21") ayant la même position en longueur, sur des côtés opposés de l'axe longitudinal (A), sont définis parmi la pluralité des points d'injection (8 à 17, 17', 17", 18', 18", 10', 19", 20', 20", 21', 21"), par lesquels une masse fondue de la matière plastique est injectée simultanément dans un outil de moulage par injection.

7. Procédé selon l'une des revendications précédentes, **caractérisé en ce que** l'élément d'appareil électroménager (6) est fabriqué avec une épaisseur de paroi entre 0,6 mm et 1 mm en associant le moulage par injection de parois minces et le moulage par injection en cascade.

8. Procédé selon l'une des revendications précédentes, **caractérisé en ce que**, concernant le moulage par injection en cascade, au moins quatre points d'injection (8 à 17, 17', 17", 18', 18", 10', 19", 20', 20", 21', 21") sont définis.

9. Procédé selon l'une des revendications précédentes, **caractérisé en ce qu'**un élément d'appareil électroménager (6) en forme de cuvette est fabriqué à titre d'élément d'appareil électroménager.

10. Procédé selon la revendication 9, **caractérisé en ce qu'**un fond de cuvette (7) de l'élément d'appareil électroménager (6) en forme de cuvette à fabriquer est fabriqué avec une région de surface quadrangulaire présentant une première longueur de côté, en particulier une largeur, d'au moins 30 cm et/ou une deuxième longueur de côté, en particulier une hauteur, d'au moins 25 cm.

11. Procédé selon la revendication 9 ou 10, **caractérisé en ce que** le nombre et/ou la position des points d'injection (8 à 17, 17', 17", 18', 18", 10', 19", 20', 20", 21', 21") pour le moulage par injection en cascade est(sont) défini(s) en fonction de la taille de l'élément d'appareil électroménager (6) en forme de cuvette, en particulier en fonction de la taille de la région de surface d'un fond de cuvette (7) de l'élément d'appareil électroménager (6).

12. Procédé selon la revendication 11, **caractérisé en ce que** le nombre de points d'injection (8 à 17, 17', 17", 18', 18", 10', 19", 20', 20", 21', 21") le long d'un axe longitudinal (A) de l'élément d'appareil électroménager (6) à fabriquer et/ou la position des points d'injection (8 à 17, 17', 17", 18', 18", 10', 19", 20', 20", 21', 21") le long d'un axe longitudinal (A) de l'élément d'appareil électroménager (6) à fabriquer sont définis en fonction de la taille de l'élément d'appareil électroménager (6) en forme de cuvette, en particulier en fonction de la taille de la région de surface d'un fond de cuvette (7) de l'élément d'appareil électroménager (6).

13. Procédé selon la revendication 11 ou 12, **caractérisé en ce que** le nombre de points d'injection (8 à 17, 17', 17", 18', 18", 10', 19", 20', 20", 21', 21") est défini par paires et sur un côté opposé par rapport à un axe longitudinal (A) de l'élément d'appareil électroménager (6) en forme de cuvette et le nombre des paires de points d'injection est défini en fonction de la taille de l'élément d'appareil électroménager (6) en forme de cuvette, en particulier en fonction de la taille de la région de surface d'un fond de cuvette (7) de l'élément d'appareil électroménager (6).

14. Procédé selon l'une des revendications précédentes, **caractérisé en ce qu'**une force de retenue pour maintenir un outil de moulage par injection lors du moulage par injection de l'élément d'appareil électroménager (6) est limitée à une valeur inférieure ou égale à celle d'un poids de 1700 tonnes.

15. Procédé selon l'une des revendications précédentes, **caractérisé en ce qu'**à titre d'élément d'appareil électroménager (6), un habillage intérieur (6) d'une porte (4) d'un appareil électroménager est fabriqué.

16. Élément d'appareil électroménager (6), qui est fabriqué par un procédé selon les revendications précédentes.
